# FASCICULE DE BREVET EUROPEEN

(11) **EP 1 444 426 B1**
(45) Date de publication et mention de la délivrance du brevet: **28.11.2007**
(21) Numéro de dépôt: 02803048.4
(22) Date de dépôt: 08.11.2002
(51) Int. Cl.: F01P 7/16

(54) **SYSTEME DE GESTION DE L'ENERGIE THERMIQUE DEVELOPPEE PAR UN MOTEUR THERMIQUE DE VEHICULE AUTOMOBILE**
SYSTEM ZUR VERWALTUNG VON DURCH EINEN KRAFTFAHRZEUGWÄRMEMOTOR ERZEUGTER WÄRMEENERGIE
SYSTEM FOR MANAGING HEAT ENERGY PRODUCED BY A MOTOR VEHICLE HEAT ENGINE

(30) Priorité: 13.11.2001 FR 0114662; 18.09.2002 FR 0211564
(43) Date de publication de la demande: 11.08.2004
(73) Titulaire: VALEO SYSTEMES THERMIQUES, 78320 Le Mesnil Saint-Denis (FR)
(72) Inventeur: AP, Ngy, Srun, F-78470 Saint Rémy les Chevreuse (FR); GUERRERO, Pascal, F-78320 Le Mesnil Saint Denis (FR); JOUANNY, Philippe, F-78280 Guyancourt (FR)
(74) Mandataire: Rolland, Jean-Christophe
(86) Numéro de dépôt international: PCT/FR2002/003852
(87) Numéro de publication internationale: WO 2003/042515

(56) Documents cités:
- EP-A- 0 541 995
- WO-A-01/34952
- DE-A- 19 730 678
- DE-B- 1 128 702
- FR-A- 2 800 125
- US-A- 3 752 132
- US-A- 5 215 044
- US-A- 5 353 757
- US-A- 6 098 576

## Description

L'invention concerne un système de gestion de l'énergie thermique développée par un moteur thermique de véhicule automobile comprenant un réseau principal équipé d'une pompe principale pour faire circuler un fluide caloporteur entre le moteur thermique et un radiateur de refroidissement principal échangeant de la chaleur avec l'air atmosphérique extérieur, le réseau principal comprenant, en outre, une canalisation de court-circuit et une canalisation de chauffage comportant un aérotherme, et une boucle secondaire incluant un radiateur secondaire et une pompe secondaire.

Les moteurs thermiques de véhicules automobiles sont refroidis au moyen d'un radiateur de refroidissement placé à l'avant du véhicule. Un circuit de fluide de refroidissement permet de faire circuler un fluide caloporteur entre le moteur thermique et le radiateur de refroidissement afin de refroidir le moteur, voir par exemple US 5 353 757 A.
L'énergie thermique dégagée par le moteur est également utilisée pour chauffer l'habitacle du véhicule en faisant passer le fluide caloporteur dans un aérotherme. En outre; les véhicules automobiles modernes comportent de plus en plus des équipements qui échangent de l'énergie thermique avec leur environnement extérieur. La plus grande partie de ces équipements doivent être refroidis. C'est le cas, en particulier, du condenseur qui fait partie du circuit de climatisation de l'habitacle du véhicule automobile, mais également du radiateur de refroidissement du circuit d'huile et du radiateur de refroidissement de l'air de suralimentation. De plus en plus souvent, également, on refroidit les gaz d'échappement afin de diminuer la pollution.

D'autres équipements, peu nombreux, doivent au contraire être réchauffés. C'est le cas, en particulier, de l'échangeur du réchauffeur de carburant.

Dans les véhicules fabriqués actuellement, on prévoit un circuit de fluide spécial pour chaque équipement à refroidir ou à réchauffer. Par exemple, le circuit de climatisation de l'habitacle du véhicule automobile comporte un échangeur de chaleur, constituant un condenseur, disposé à l'avant du véhicule devant le radiateur de refroidissement du moteur thermique. Un fluide frigorigène particulier, distinct du fluide caloporteur du moteur thermique, parcourt le circuit de climatisation. Des conduites spéciales sont nécessaires pour relier le condenseur à l'évaporateur qui est situé dans le boîtier de l'appareil de climatisation et de chauffage de l'habitacle du véhicule.

De même, si le véhicule est équipé d'un refroidisseur d'air de suralimentation, le refroidissement de l'air est effectué dans un échangeur air-air qui est disposé à l'avant du véhicule et qui est refroidi par une circulation d'air atmosphérique.

Cette conception se traduit par la présence d'un grand nombre de canalisations et de conduits sous le capot du moteur, par exemple les tuyaux d'admission d'air nécessaires au refroidisseur d'air de suralimentation, coûteux à ramener en face avant du véhicule parce que leur cheminement est complexe et parce qu'ils sont encombrants.

La présente invention a pour but un système de gestion de l'énergie thermique développée par un moteur thermique qui réduit l'encombrement des circuits de fluide.

Ce but est atteint, conformément à l'invention, par le fait que le.réseau principal et la boucle secondaire sont reliés par des moyens d'interconnexion qui permettent de faire circuler de manière contrôlée le fluide caloporteur entre le réseau principal et la boucle secondaire ou d'interdire cette circulation en fonction de l'état de charge du moteur thermique.

Lesdits moyens d'interconnexion sont aptes, par exemple, à relier directement :
- Une ou des entrées et/ou une ou des sorties du radiateur de refroidissement principal avec la boucle secondaire, et/ou
- Une ou des entrées et/ou une ou des sorties du radiateur secondaire avec la boucle principale.

Par "aptes à relier directement", on entend que lesdits moyens d'interconnexion sont aptes à établir une liaison autorisant le passage du fluide entre le radiateur d'une des boucles et l'autre boucle, sans passage par un autre organe dans lequel s'effectuerait un échange substantiel de chaleur.

Ledit moteur pourra présenter une entrée unique et une sortie unique pour la circulation du fluide caloporteur dans le moteur.

Fréquemment, le véhicule automobile comporte un ou plusieurs équipements en relation d'échange thermique avec le milieu qui leur est extérieur par l'intermédiaire d'un échangeur de chaleur d'équipement, le ou les échangeurs de chaleur d'équipement étant intégrés au réseau principal et/ou à la boucle secondaire, chaque échangeur de chaleur étant en relation d'échange thermique avec le fluide de cycle caloporteur.

Grâce à cette caractéristique, il n'est pas nécessaire de ramener en face avant du véhicule chacun des échangeurs de chaleur d'équipement. Il y a une liberté beaucoup plus grande pour les disposer à un emplacement approprié sous le capot du véhicule automobile. En particulier, les échangeurs de chaleur d'équipement peuvent être rapprochés de l'équipement qu'ils refroidissent. La longueur des canalisations est ainsi fortement diminuée, ce qui diminue par voie de conséquence leur encombrement. D'autre part, la quantité de fluide caloporteur qui parcourt ces canalisations est également réduite de manière importante, ce qui permet une diminution de coût parce que ces fluides sont généralement coûteux.

Par ailleurs, dans les véhicules connus, la surface d'échange du radiateur principal, également appelé radiateur à haute température, et la surface d'échange du radiateur secondaire, également appelé radiateur à basse température, sont fixes. Le radiateur principal ou radiateur à haute température est utilisé exclusivement pour le refroidissement des équipements du réseau principal à haute température, tandis que le radiateur secondaire ou radiateur à basse température est utilisé exclusivement pour le refroidissement et/ou le réchauffage des équipements de la boucle secondaire à basse température. Or, dans certaines conditions de charge du moteur, en particulier à faible charge, il n'est pas nécessaire de refroidir énergiquement le moteur thermique. C'est pourquoi le liquide caloporteur de refroidissement du moteur circule par une canalisation de dérivation qui contourne le radiateur.

Un autre objet de la présente invention est précisément de proposer un système de gestion de l'énergie thermique développée par le moteur thermique du véhicule qui surmonte ce problème en permettant d'utiliser au mieux la surface d'échange de chaleur disponible pour les besoins du circuit à haute température et du circuit à basse température.

Ce résultat est atteint, conformément à l'invention, par le fait que les moyens d'interconnexion sont aptes à constituer des configurations du réseau principal et de la boucle secondaire telles qu'une partie ou la totalité de la surface d'échange de chaleur du radiateur principal et/ou de la surface d'échange du radiateur secondaire sont intégrées sélectivement soit exclusivement au réseau principal, soit exclusivement à la boucle secondaire, soit simultanément au réseau principal et à la boucle secondaire, en fonction d'au moins un paramètre de contrôle de l'état de charge du moteur thermique du véhicule automobile.

Le paramètre de contrôle peut être choisi notamment dans le groupe comprenant la température du fluide caloporteur de refroidissement du moteur, la charge moteur, le régime moteur, la puissance rejetée par le moteur thermique sur le fluide caloporteur ou une combinaison des valeurs de ces paramètres.

Ainsi, il est possible de faire varier la répartition de la surface d'échange globale du système, c'est-à-dire la somme de la surface d'échange du radiateur principal et du radiateur secondaire, en fonction des besoins des circuits de refroidissement à haute température et à basse température. On peut ainsi augmenter la surface d'échange de chaleur disponible pour le circuit à haute température en diminuant la surface de refroidissement disponible pour le circuit à basse température. Inversement, on peut diminuer la surface d'échange de chaleur attribuée au circuit à haute température, ce qui permet simultanément d'augmenter celle du circuit à basse température. En particulier, lorsque le moteur n'a pas besoin d'être refroidi énergiquement, une plus grande capacité de refroidissement peut être attribuée au circuit à basse température et on parvient ainsi à un meilleur niveau de performance pour le refroidissement des équipements du circuit à basse température.

On peut généraliser l'invention au cas où le véhicule automobile comporterait plus de deux circuits de refroidissement, par exemple trois. Le système de gestion de l'énergie thermique de l'invention pourrait alors comporter trois sections d'échange de chaleur et la surface d'échange de chaleur globale du module pourrait être répartie entre ces trois sections d'échange de chaleur en fonction des besoins.

Dans une réalisation particulière du système de gestion de l'invention, le passage d'une configuration à une autre se fait par une variation continue de la surface d'échange de chaleur.

Dans une autre réalisation particulière, le radiateur principal et/ou le radiateur secondaire sont scindés en au moins deux sections d'échange de chaleur discrètes, le passage d'une configuration à une autre se faisant par incréments, par le passage d'une section d'échange de chaleur d'un circuit à l'autre.

Dans ce dernier cas, les surfaces d'échange de chaleur de l'échangeur principal intégré au réseau principal et/ou les surfaces d'échange de chaleur de l'échangeur secondaire intégré à la boucle secondaire sont raccordées en parallèle les unes aux autres. Ou bien, en variante, elles sont raccordées en série les unes aux autres.

Avantageusement, le réseau principal comporte une vanne thermostatique à trois voies, une première voie étant raccordée à la canalisation de moteur, une deuxième voie étant raccordée à une canalisation de court-circuit, une troisième voie étant raccordée à une canalisation de radiateur de refroidissement principal. Cette vanne thermostatique, dont le fonctionnement est classique, permet de faire circuler par intermittence le fluide de refroidissement du moteur entre la canalisation de dérivation ou de court-circuit et la canalisation de radiateur principal.

Dans une autre réalisation du système de gestion de l'invention, le réseau principal comporte une vanne à quatre voies, une première voie de cette vanne étant raccordée à une canalisation de moteur, une deuxième voie de la vanne étant raccordée à une canalisation de court-circuit, une troisième voie étant raccordée à une canalisation de radiateur principal et une quatrième voie étant raccordée à une canalisation de chauffage.

Cette dernière solution permet une gestion plus fine de l'énergie thermique. En effet, avec une vanne à trois voies, le fluide de refroidissement transite en permanence par le radiateur de chauffage de l'habitacle du véhicule automobile, même si ce dernier n'est pas utilisé. L'utilisation d'une vanne à quatre voies permet de fermer la circulation du fluide dans le radiateur de chauffage de l'habitacle lorsqu'elle n'est pas nécessaire. L'usure du radiateur de chauffage par la circulation d'un liquide corrosif s'en trouve ralentie.

Dans une réalisation préférée, le radiateur principal et/ou le radiateur secondaire font partie d'un module d'échange de chaleur comprenant un premier échangeur de chaleur et un second échangeur de chaleur ayant chacun une boîte collectrice d'entrée et une boîte collectrice de sortie, le premier et le second échangeur de chaleur étant superposés de manière à être traversés par un même flux d'air, la boîte collectrice de sortie du premier échangeur de chaleur communiquant avec la boîte collectrice d'entrée du second échangeur de chaleur par un orifice de passage, des moyens de vanne permettant d'ouvrir ou de fermer l'orifice de passage.

Selon un premier mode de réalisation de l'invention, les moyens d'interconnexion sont aptes à constituer une configuration de démarrage à froid comprenant une boucle principale de démarrage à froid et une boucle secondaire de démarrage à froid isolées l'une de l'autre, le radiateur principal et le radiateur secondaire étant intégrés à la boucle secondaire de démarrage à froid ; et une configuration de fonctionnement normal dans laquelle la circulation du fluide caloporteur s'effectue par intermittence entre la boucle principale de démarrage à froid et la boucle secondaire de démarrage à froid en fonction de l'état de charge du moteur thermique.

Avantageusement, le système comporte une vanne thermostatique disposée sur la boucle principale de démarrage à froid, une circulation de fluide caloporteur s'effectuant entre la boucle principale de démarrage à froid et la boucle secondaire de démarrage à froid en fonction de l'état ouvert ou fermé de la vanne thermostatique.

De plus, selon ce mode de réalisation, les moyens d'interconnexion sont, en outre, aptes à réaliser une configuration de forte charge dans laquelle le réseau principal et la boucle secondaire sont isolés l'un de l'autre, le radiateur principal servant exclusivement au refroidissement du réseau principal et le radiateur secondaire servant exclusivement au refroidissement de la boucle secondaire.

Enfin, les moyens d'interconnexion sont, en outre, aptes à réaliser une configuration de très forte charge dans laquelle une circulation de fluide caloporteur s'effectue entre le réseau principal et la boucle secondaire, la capacité de refroidissement du radiateur secondaire étant utilisée pour refroidir simultanément la boucle secondaire et le moteur thermique.

Dans ce mode de réalisation, les moyens d'interconnexion peuvent comprendre une première vanne à trois voies intégrée au réseau principal et une seconde vanne à trois voies intégrée à la boucle secondaire.

Par ailleurs, l'invention concerne un système de vanne pour réaliser l'interconnexion d'un réseau principal équipé d'une pompe principale pour faire circuler un fluide de cycle caloporteur entre le moteur thermique et un radiateur de refroidissement principal échangeant de la chaleur avec l'air atmosphérique extérieur, et d'une boucle secondaire incluant un radiateur secondaire et une pompe secondaire. Il comporte une vanne à quatre voies, une première et une seconde vanne à trois voies, la vanne à quatre voies et la première vanne à trois voies étant intégrées au réseau principal, la seconde vanne à trois voies étant intégrée à la boucle secondaire.

Dans un autre mode de réalisation, l'échangeur principal est scindé en une section à haute température intégrée en permanence exclusivement au réseau principal et en une section attribuable qui peut être intégrée soit au réseau principal, soit à la boucle secondaire, l'échangeur de chaleur secondaire étant intégré en permanence à la boucle secondaire.

Dans ce mode de réalisation, les moyens d'interconnexion peuvent être constitués par deux vannes à quatre voies. Ils peuvent également être constitués par une vanne unique à six voies au moins.
De préférence, la vanne à six voies comprend un corps comportant une paroi latérale cylindrique délimitant un logement cylindrique, des tubulures pour l'entrée ou la sortie du fluide dans le corps, un organe rotatif de réglage monté tournant autour d'un axe dans le logement cylindrique du corps, cet organe rotatif étant propre à prendre différentes positions angulaires pour contrôler la circulation du fluide entre les tubulures.

Avantageusement, les tubulures débouchent dans la paroi latérale cylindrique.

Les voies de la vanne peuvent être placées toutes sur un même niveau. Ou bien elles peuvent être placées sur plusieurs niveaux, par exemple deux. Il faut alors prévoir une voie supplémentaire permettant d'établir une communication entre les différents niveaux. Dans ce cas, la vanne comporte sept voies au moins.

Dans une réalisation préférée, l'organe rotatif de réglage comporte des poches aptes à mettre deux ou plus de deux tubulures en communication l'une avec l'autre.

Les moyens d'intercommunication, par exemple deux vannes à quatre voies ou une vanne unique, sont aptes à constituer au moins une configuration de démarrage et de fonctionnement à charge modérée dans laquelle la section attribuable est intégrée à la boucle secondaire et une configuration de forte ou très forte charge dans laquelle la section attribuable est intégrée au réseau principal.

Dans un troisième mode de réalisation, le système de gestion de l'énergie thermique développée par un moteur thermique de véhicule automobile comprend un radiateur principal et un radiateur secondaire, comportant chacun une section d'échange de chaleur unique, les moyens d'interconnexion permettant de constituer soit une configuration de charge faible et moyenne dans laquelle le radiateur principal est intégré exclusivement au réseau principal et le radiateur secondaire est intégré exclusivement à la boucle secondaire, soit une configuration de forte charge dans laquelle le radiateur principal et le radiateur secondaire sont montés en parallèle et appartiennent simultanément au réseau principal et à la boucle secondaire.

Dans une variante de réalisation, les moyens d'interconnexion sont constitués par des vannes à deux voies montées entre le radiateur principal et le radiateur secondaire.

Avantageusement, les moyens d'interconnexion sont constitués par des orifices de passage prévus entre la boîte collectrice de l'échangeur principal et la boite collectrice de l'échangeur secondaire, et par des clapets qui permettent d'ouvrir ou de fermer sélectivement ces orifices.

Le clapet peut être commandé par un vérin thermique composé d'un élément à dilatation de cire actionné par une thermistance.

Dans une réalisation particulière, le vérin est intégré aux tubulures de la boîte à eau.

Avantageusement, les moyens d'interconnexion sont aptes à constituer une configuration de démarrage à froid comprenant une boucle principale de démarrage à froid et une boucle secondaire de démarrage à froid isolées l'une de l'autre, le radiateur principal et le radiateur secondaire étant intégrés à la boucle secondaire ; et une configuration de fonctionnement normal dans laquelle une circulation de fluide caloporteur s'effectue par intermittence entre la boucle principale de démarrage à froid et la boucle secondaire de démarrage à froid en fonction de l'état de charge du moteur thermique.

Dans une variante particulière, le système comporte une vanne thermostatique disposée sur la boucle principale de démarrage à froid, une circulation de fluide caloporteur s'effectuant entre la boucle principale de démarrage à froid et la boucle secondaire de démarrage à froid en fonction de l'état ouvert ou fermé de la vanne thermostatique.

Avantageusement encore, les moyens d'interconnexion sont, en outre, aptes à réaliser une configuration de forte charge dans laquelle le réseau principal et la boucle secondaire sont isolés l'un de l'autre, le radiateur principal servant exclusivement au refroidissement du réseau principal et le radiateur secondaire servant exclusivement au refroidissement de la boucle secondaire.

Ainsi, le radiateur principal n'est dimensionné que pour dissiper au maximum une certaine fraction, par exemple 80%, du flux thermique maximal rejeté dans l'eau par le moteur thermique.

Les moyens d'interconnexion sont, en outre, aptes à réaliser une configuration de très forte charge dans laquelle une circulation de fluide caloporteur s'effectue entre le réseau principal et la boucle secondaire, la capacité de refroidissement du radiateur secondaire étant utilisée pour refroidir simultanément la boucle secondaire et le moteur thermique.

Cette configuration de très forte charge est intéressante parce qu'elle permet de disposer en face avant du véhicule d'un radiateur principal plus petit, donc moins coûteux à fabriquer. En outre, si le radiateur principal est plus petit, on peut envisager un radiateur secondaire plus grand qui assure une meilleure dissipation de l'énergie thermique dans le circuit secondaire, donc un meilleur rendement, par exemple du système de climatisation du véhicule.
D'autres caractéristiques supplémentaires ou optionnelles de l'invention sont énumérées ci-après :
- le réseau principal comprend une canalisation de moteur sur laquelle sont montés la pompe principale et le moteur thermique, une canalisation de chauffage sur laquelle est monté l'aérotherme, une canalisation de radiateur principal sur laquelle est monté le radiateur principal et une canalisation de court-circuit, la canalisation de moteur, la canalisation de chauffage, la canalisation de radiateur principal et la canalisation de court-circuit étant montées en parallèle.
- la canalisation de moteur, la canalisation de chauffage, la canalisation de radiateur principal et la canalisation de court-circuit sont montées en parallèle entre une conduite et une autre conduite.
- un thermostat est placé entre la canalisation de moteur et l'autre conduite.
- la boucle secondaire comprend une canalisation de radiateur secondaire sur laquelle sont montés le radiateur secondaire et une pompe de circulation secondaire, et une canalisation.
- le réseau principal et la boucle secondaire comportent chacun un vase d'expansion.
- le réseau principal et la boucle secondaire comportent un vase d'expansion commun.
- le réseau principal comprend une canalisation de moteur sur laquelle sont montés la pompe principale et le moteur thermique, une canalisation de chauffage sur laquelle est monté l'aérotherme, une canalisation de radiateur principal sur laquelle est monté le radiateur principal et une canalisation de court-circuit, la canalisation de moteur, la canalisation de chauffage, la canalisation de radiateur principal et la canalisation de court-circuit étant montées en parallèle.
- la canalisation de moteur, la canalisation de chauffage, la canalisation de radiateur principal et la canalisation de court-circuit sont montées en parallèle entre une conduite et une autre conduite.
- la boucle secondaire comprend une canalisation de radiateur secondaire sur laquelle sont montés le radiateur secondaire et une pompe de circulation secondaire, et une canalisation.

D'autres caractéristiques et avantages de l'invention apparaîtront encore à la lecture de la description qui suit faite en référence aux figures annexées. Sur ces figures:
- la Figure 1 est une vue schématique d'un système de gestion de l'énergie thermique dissipée par un moteur thermique de véhicule automobile conforme à la présente invention ; la Figure 1A représente les échangeurs d'équipement faisant partie du réseau principal ; la Figure 1B représente les échangeurs de chaleur d'équipement faisant partie de la boucle secondaire ;
- la Figure 2 représente une variante des échangeurs d'équipement faisant partie du réseau principal ;

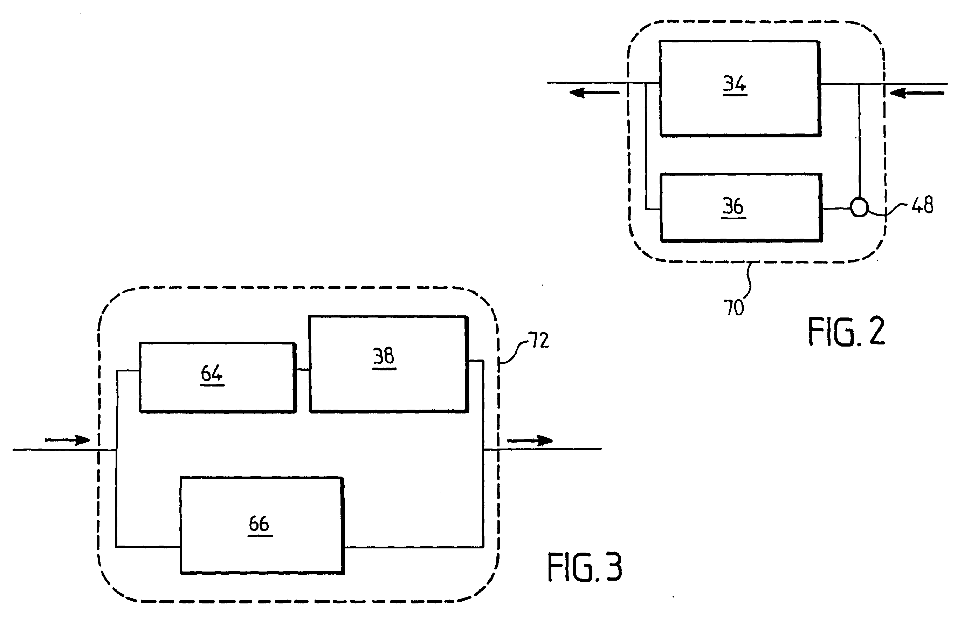

- la Figure 2 représente une variante des échangeurs d'équipement faisant partie du réseau principal;
- la Figure 3 représente une variante des échangeurs de chaleur d'équipement faisant partie de la boucle secondaire ;

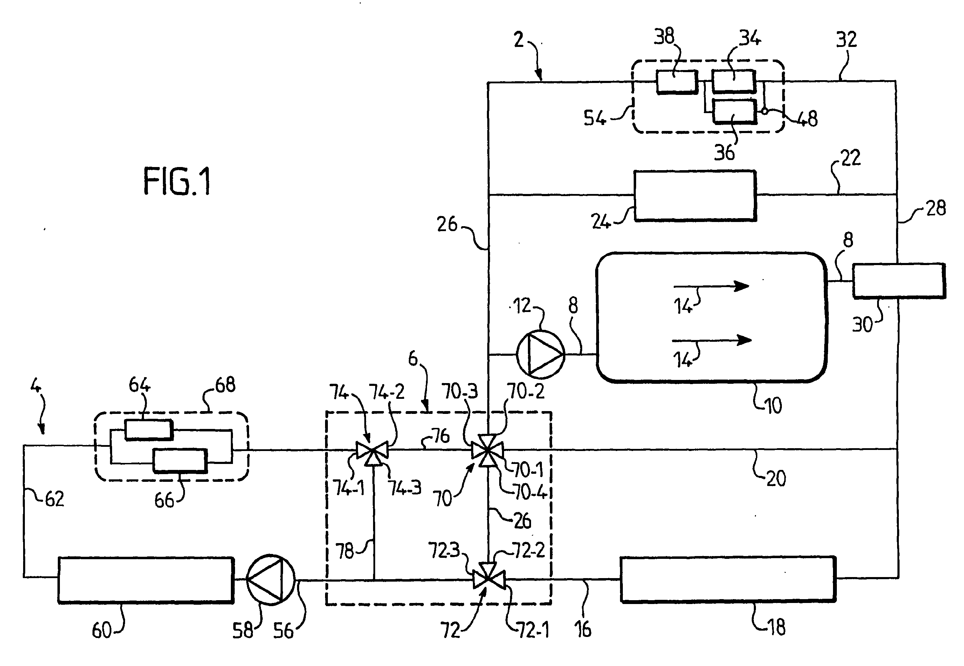

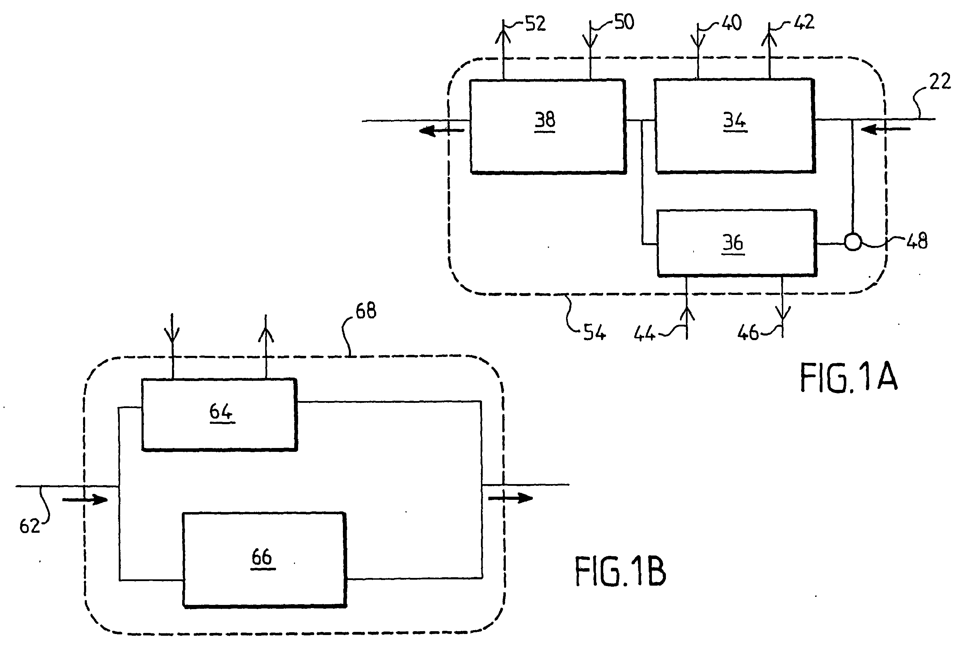

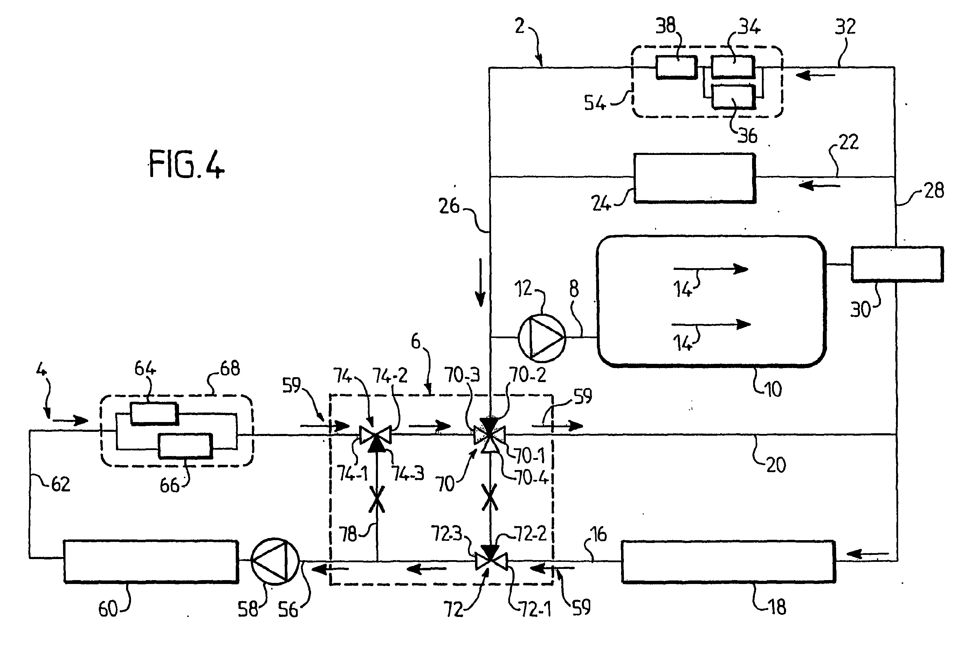

- la Figure 4 est une vue schématique du système de gestion de l'énergie thermique de la Figure 1 dans la configuration de démarrage à froid ;

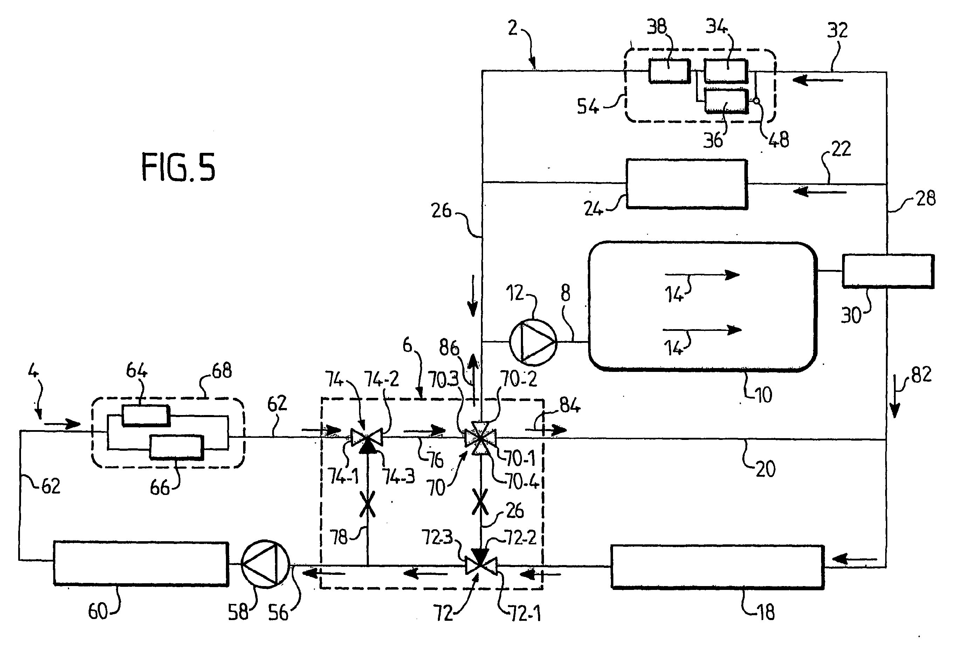

- la Figure 5 est une vue schématique du système de gestion de l'énergie thermique de la Figure 1 de la configuration de fonctionnement normal ;

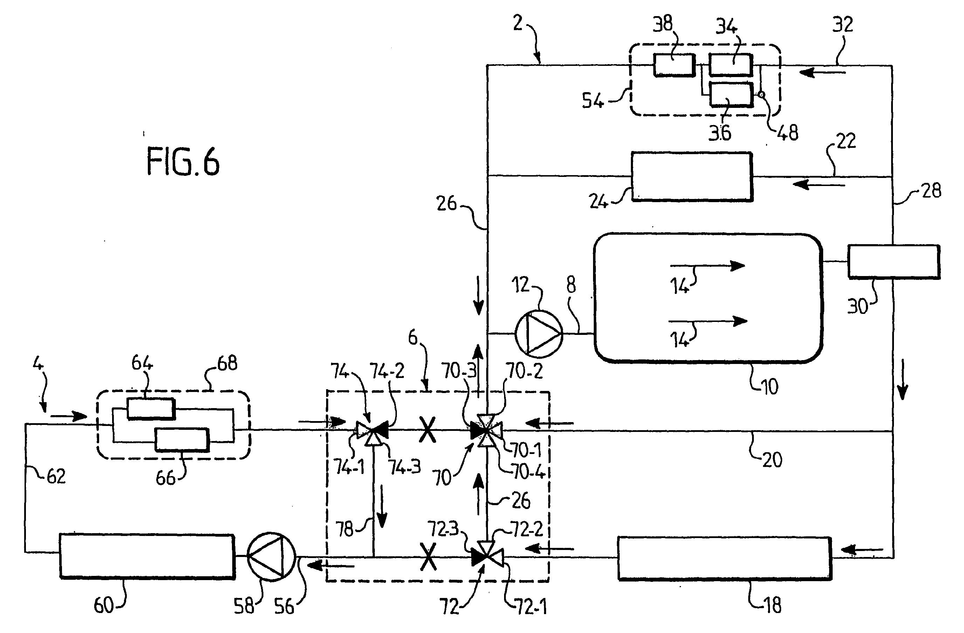

- la Figure 6 est une vue schématique du système de gestion de l'énergie thermique de la Figure 1 de la configuration de forte charge ;

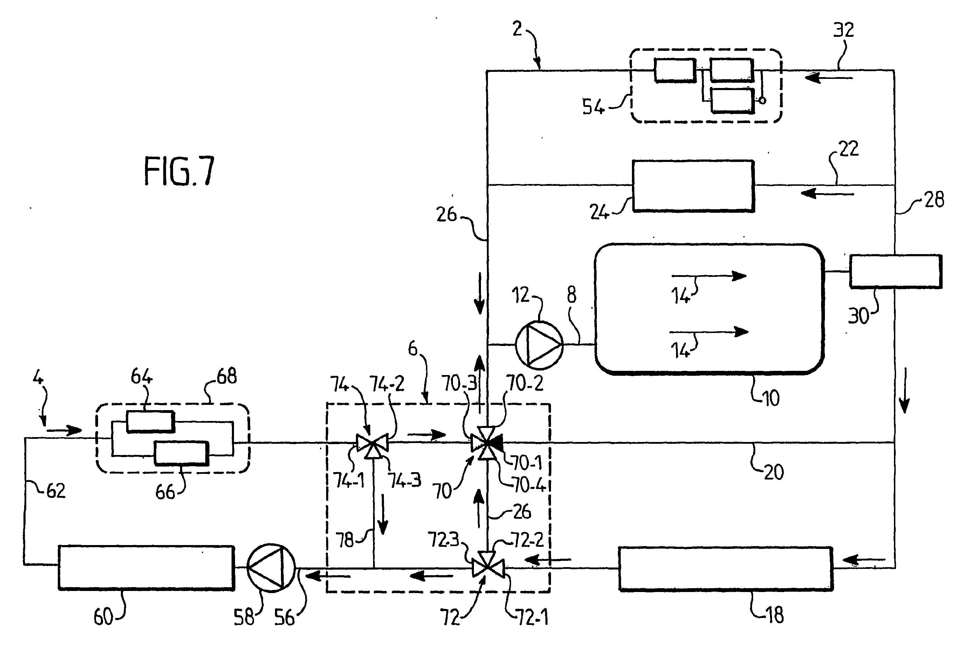

- la Figure 7 est une vue schématique du système de gestion de l'énergie thermique de la Figure 1 dans la configuration de très forte charge ;

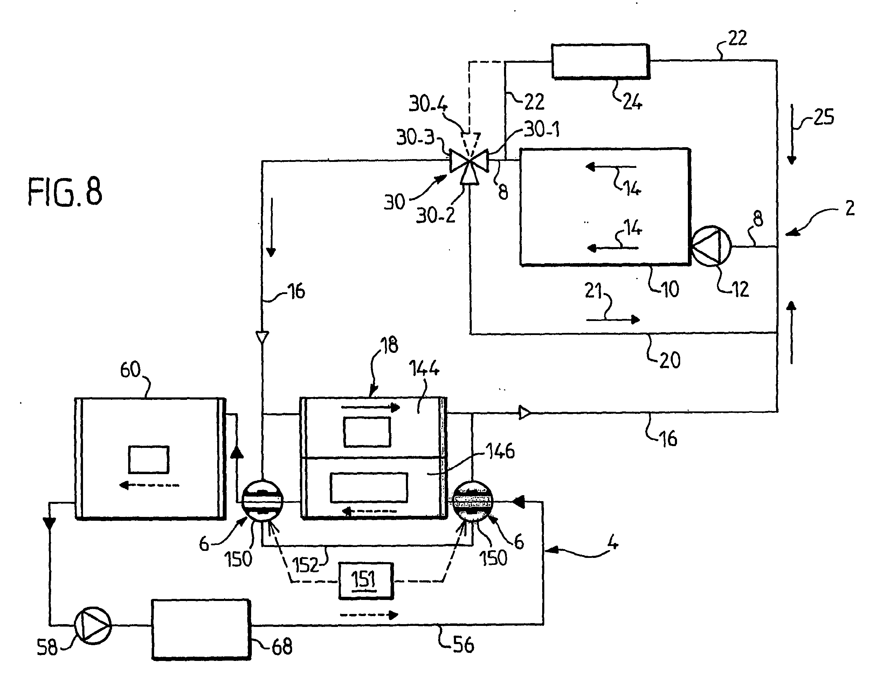

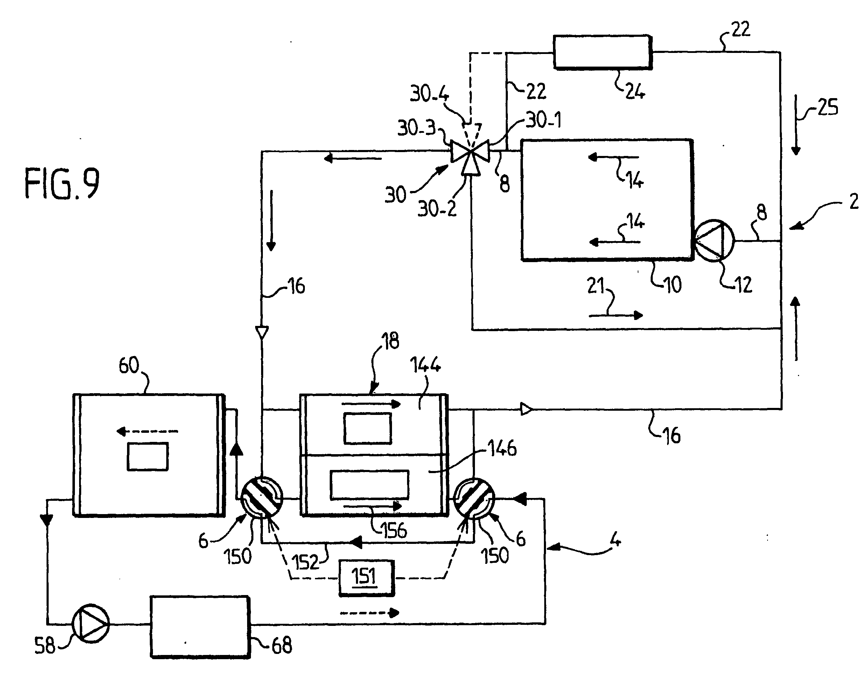

- les Figures 8 et 9 sont des vues schématiques d'un système de gestion de l'énergie thermique de l'invention comportant une vanne thermostatique à trois voies et des moyens d'interconnexion constitués par deux vannes à quatre voies ;

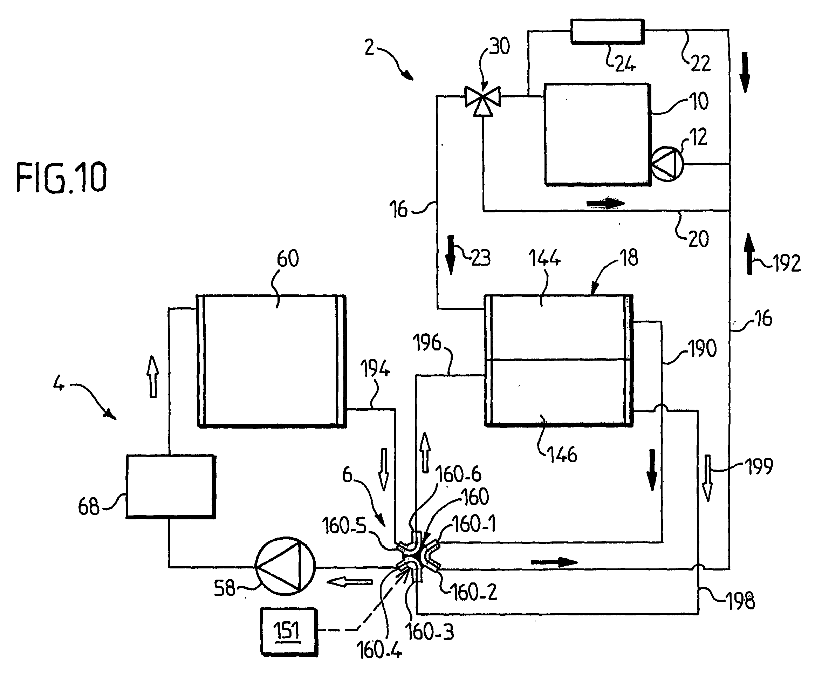

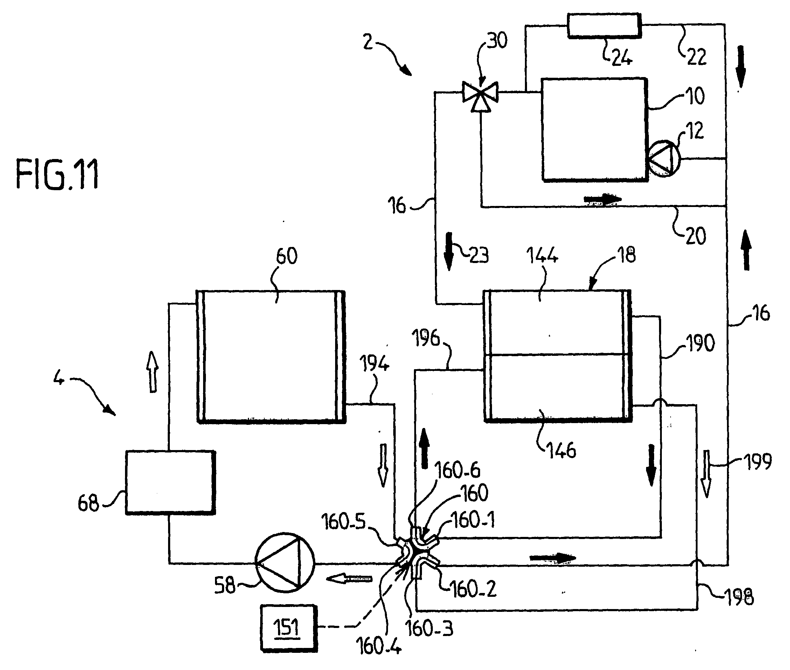

- les Figures 10 et 11 sont des vues schématiques d'un autre mode de réalisation d'un système de gestion de l'énergie thermique conforme à l'invention dans lequel les moyens de répartition sont constitués par une vanne unique ;

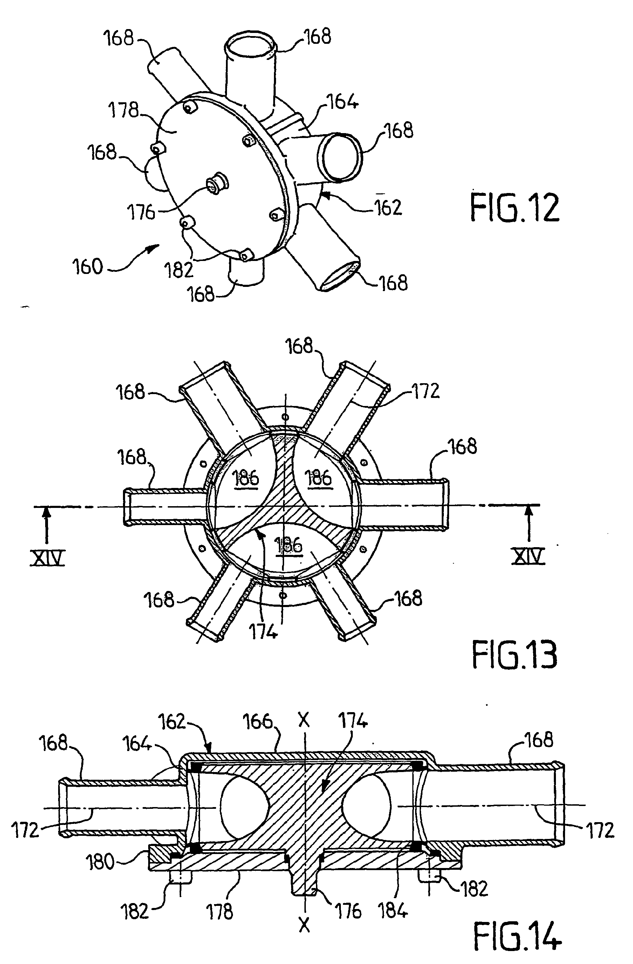

- les Figures 12 à 14 sont respectivement une vue extérieure et deux vues en coupe de la vanne unique du système représenté sur les Figures 10 et 11 ;

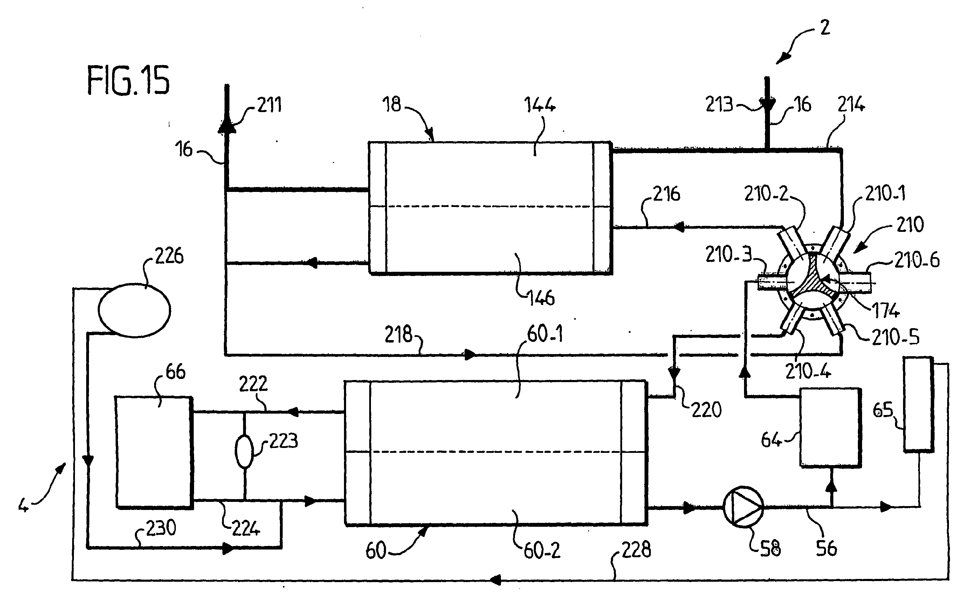

- la Figure 15 est une représentation schématique d'un système de gestion de l'énergie thermique d'un moteur de véhicule automobile comportant une vanne à cinq voies dans une configuration de démarrage ou de faible ou moyenne charge ;

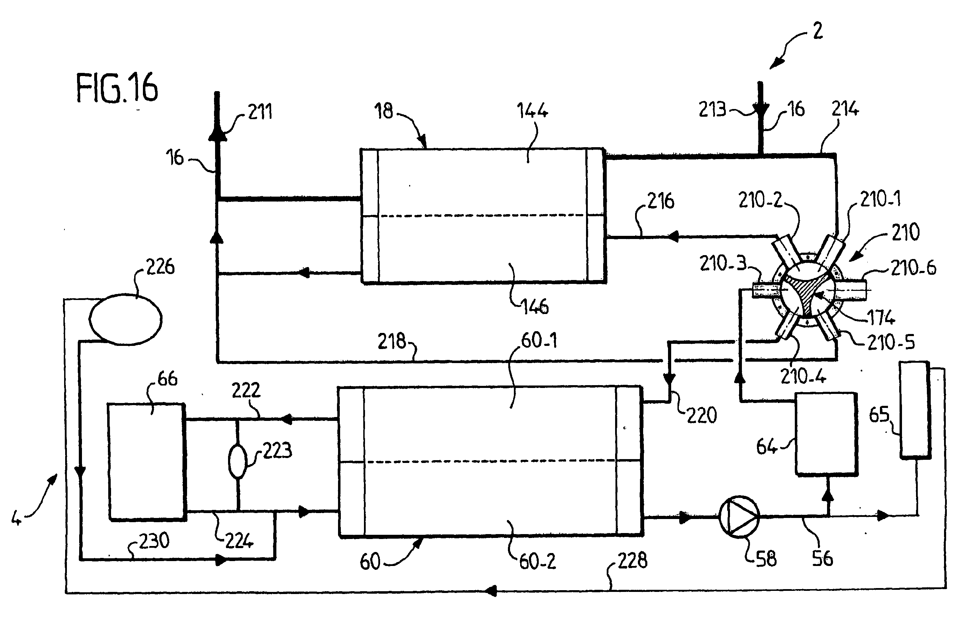

- la Figure 16 est une vue similaire à celle de la Figure 15 dans une configuration de forte ou très forte charge ;

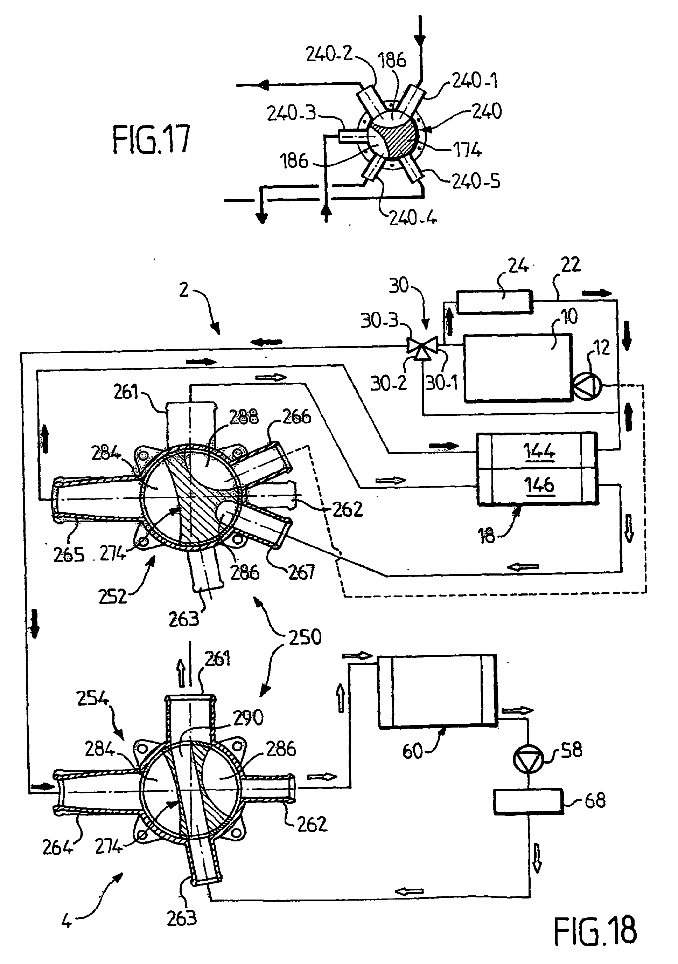

- la Figure 17 est une variante de réalisation de la vanne faisant partie du système des Figures 15 et 16 ;

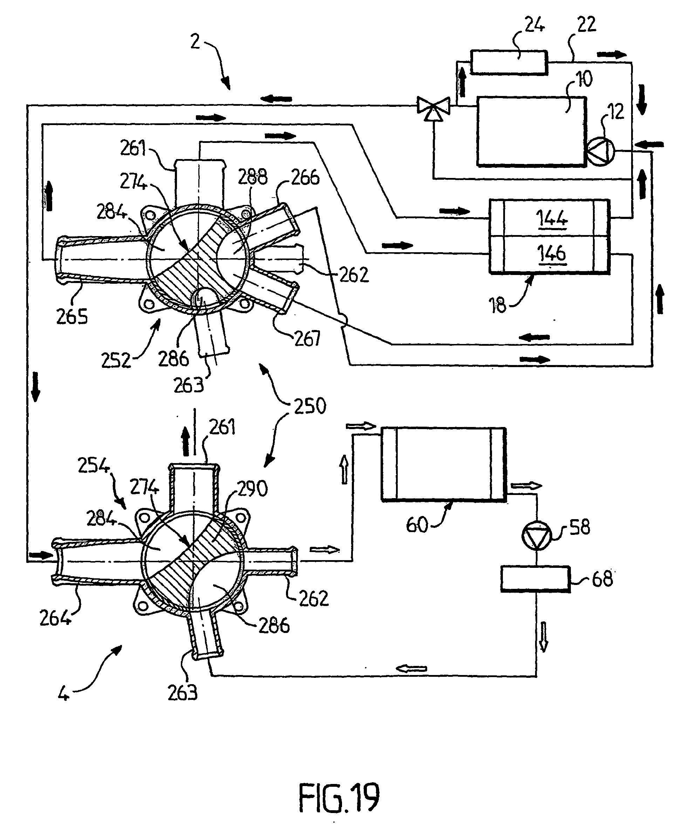

- les Figures 18 et 19 sont des vues schématiques d'encore une autre variante de réalisation d'un système de gestion de l'énergie thermique d'un moteur de véhicule automobile dans lequel les moyens d'interconnexion sont constitués par une vanne unique comportant deux étages ;

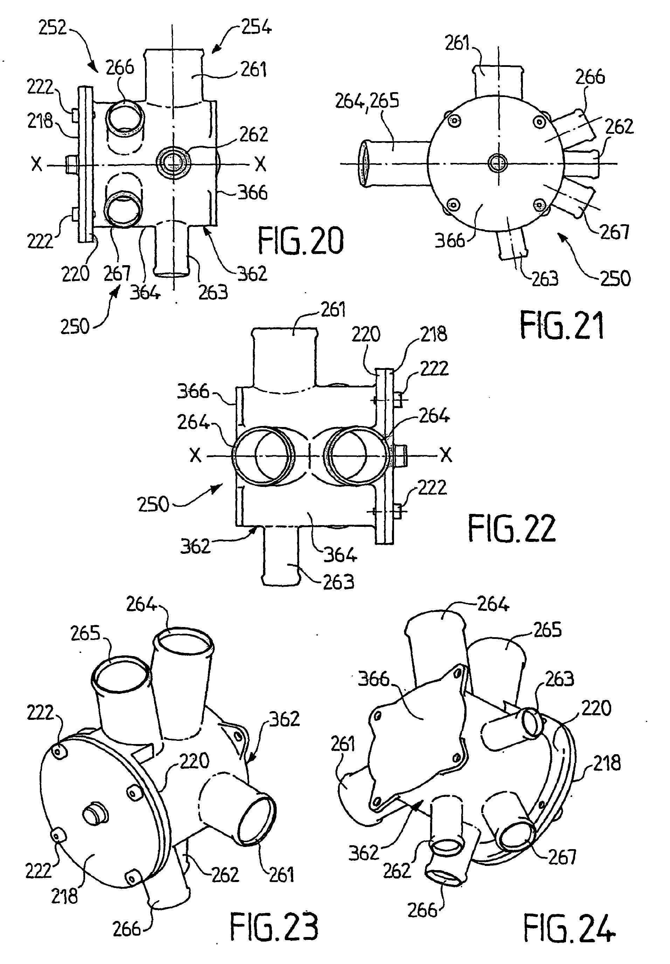

- la Figure 20 est une vue extérieure de la vanne comportant des tubulures réparties sur deux étages ou niveaux ;
- la Figure 21 est une vue de gauche de la vanne représentée sur la Figure 20 ;
- la Figure 22 est une vue arrière de la vanne représentée sur la Figure 20 ;
- les Figures 23 et 24 sont deux vues en perspective de la vanne des Figures 20 et 21 ;

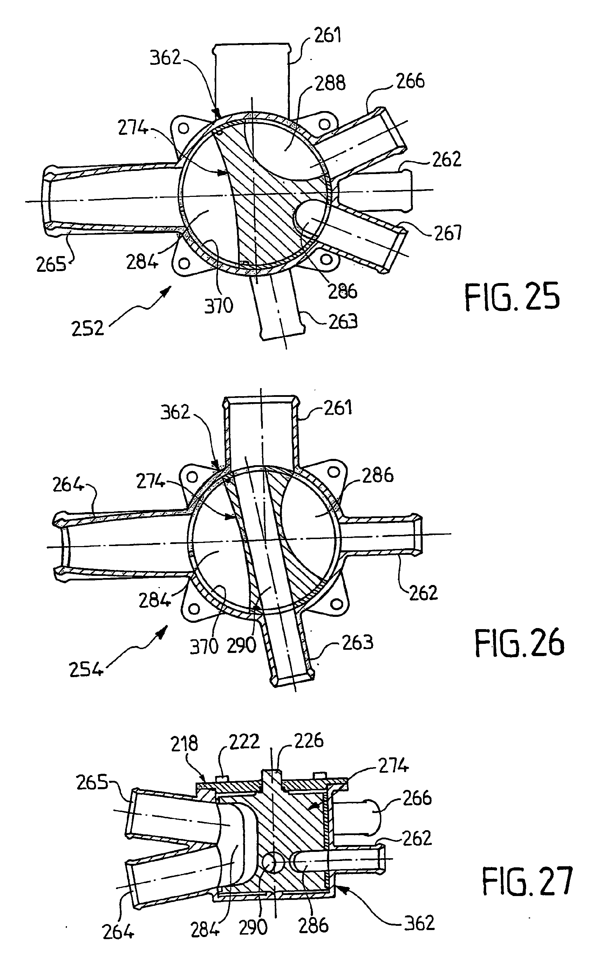

- les Figures 25 et 26 sont deux vues en coupe selon des plans perpendiculaires à l'axe XX de la vanne dans la configuration de faible charge correspondant à la Figure 18, la Figure 25 représente le niveau supérieur de la vanne, tandis que la Figure 26 représente le niveau inférieur de la vanne ;

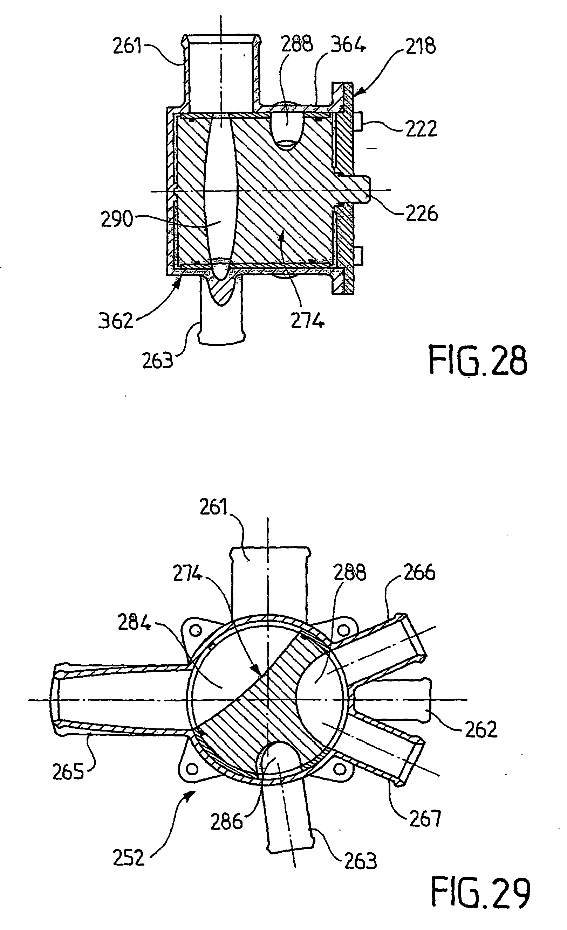

- les Figures 27 et 28 sont deux vues en coupe de la vanne à deux niveaux dans le plan de l'axe XX dans la configuration de charge partielle ;

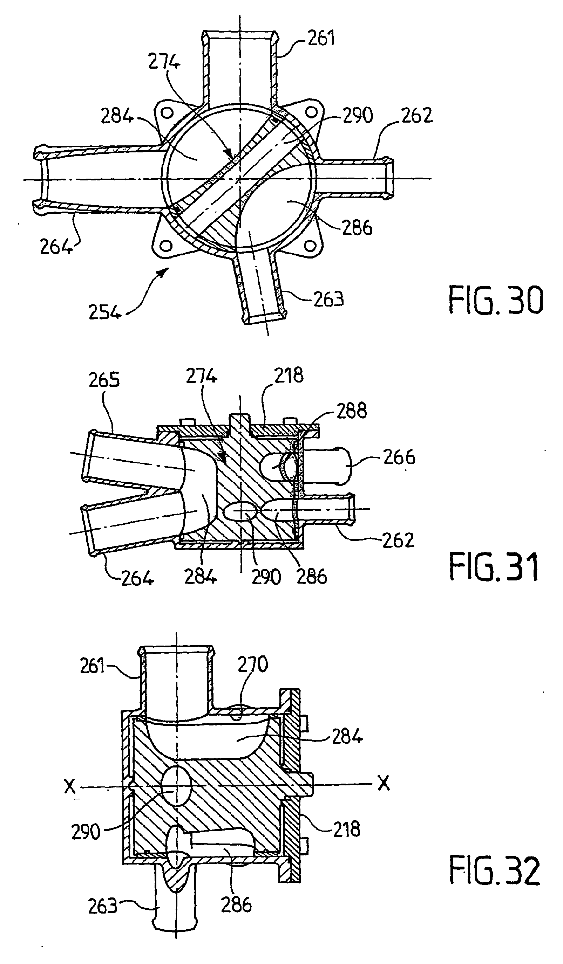

- les Figures 29 et 30 sont deux vues en coupe similaires aux Figures 25 et 26 représentées dans la configuration de forte charge ;
- les Figures 31 et 32 sont deux vues en coupe de la vanne similaires aux Figures 27 et 28, mais représentées en configuration de forte charge ;

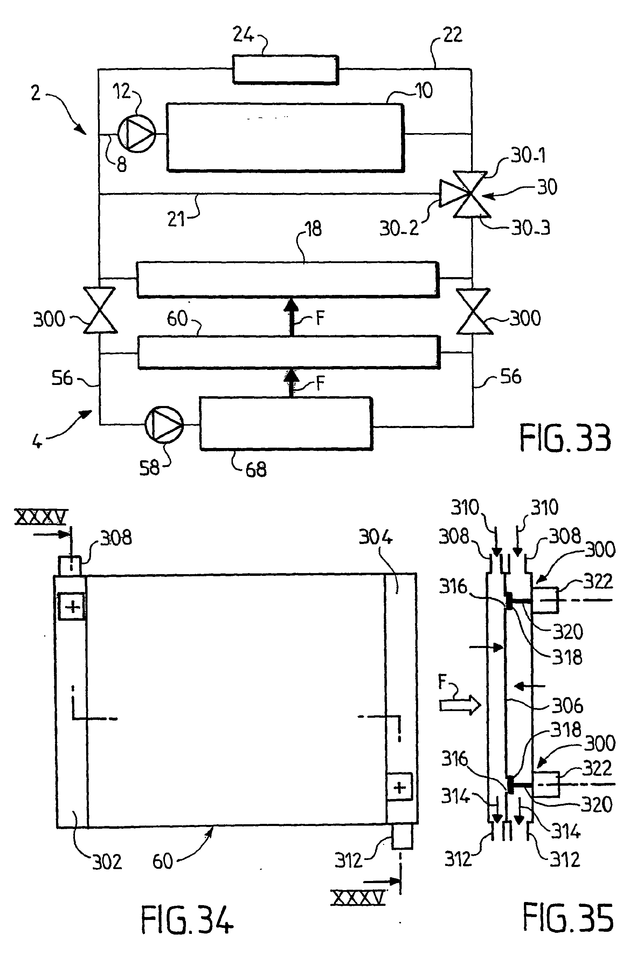

- la Figure 33 est une représentation schématique d'un système de gestion de l'énergie thermique d'un moteur comportant un radiateur à basse température et un radiateur à haute température montés en parallèle ;
- les Figures 34 et 35 sont respectivement une vue en élévation et une vue en coupe d'un module d'échange de chaleur faisant partie du système de gestion de la température représenté sur la Figure 33 ;

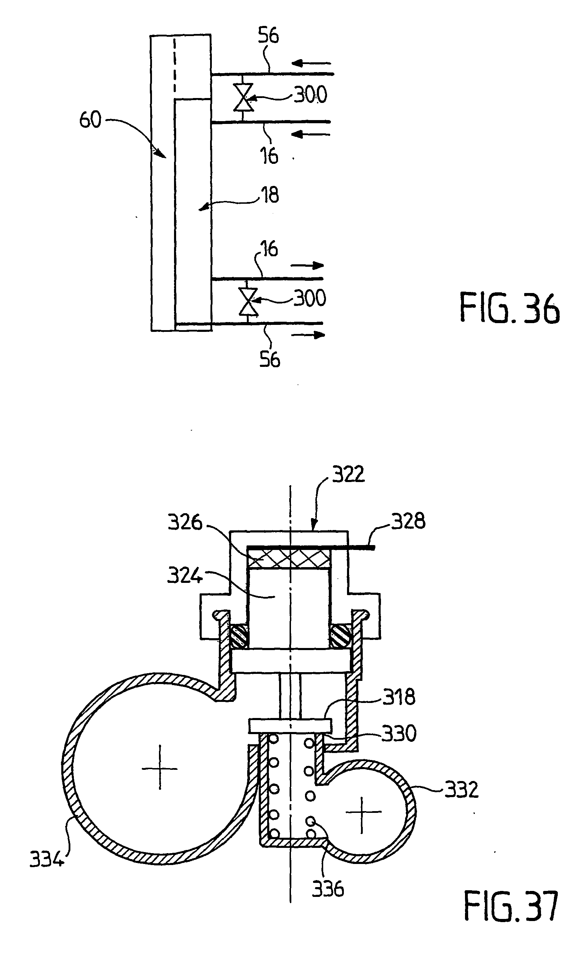

- la Figure 36 est une vue partielle en coupe d'une variante d'un module d'échange de chaleur ; et
- la Figure 37 est une vue de détail de moyens d'interconnexion destinés à un module d'échange de chaleur faisant partie du système de gestion de l'énergie thermique de la Figure 33.

On a représenté sur la Figure 1 une vue d'ensemble d'un système de gestion de l'énergie thermique dégagée par un moteur thermique conforme à la présente invention. Ce système comprend un réseau principal, désigné par la référence générale 2, une boucle secondaire, désignée par la référence générale 4, et des moyens d'interconnexion, désignés par la référence générale 6, disposés entre le réseau principal 2 et la boucle secondaire 4.

Le réseau principal 2 comprend une canalisation de moteur 8 raccordée au moteur thermique 10 du véhicule. Une pompe 12 mécanique ou électrique alimente le circuit de refroidissement du moteur 10 en fluide caloporteur, comme schématisé par les flèches 14. Le réseau principal comprend également une canalisation de radiateur 16 sur laquelle est monté un radiateur principal 18 traversé par le fluide caloporteur. Une canalisation de court-circuit 20 est montée en parallèle à la canalisation de radiateur 16.

Le réseau principal 2 comprend encore une canalisation de chauffage 22 sur laquelle est monté un aérotherme 24. Les canalisations 8, 16, 20 et 22 sont raccordées à des conduites 26 et 28. Un thermostat 30, ou une vanne thermostatique électrique et/ou pneumatique, est monté au raccordement de la canalisation de moteur 8 et de la conduite 28. Le thermostat 30 est sensible à la température du liquide caloporteur. En dessous d'une température de seuil, par exemple 100°C, le thermostat 30 est fermé et le fluide caloporteur qui sort du moteur par la canalisation 8 est dirigé exclusivement vers l'aérotherme 24. Au contraire, lorsque la température du fluide caloporteur dépasse cette valeur de seuil, le fluide peut circuler dans les deux branches de la conduite 28 et se diriger également vers le radiateur principal 18 et la canalisation de court-circuit 20.

Optionnellement, le réseau principal 2 peut comporter une branche 32 d'échangeurs d'équipement si le véhicule est équipé d'équipements complémentaires tels qu'un refroidisseur d'huile de circulation ou de gaz d'échappement. Dans ce cas, conformément à l'invention, ces équipements complémentaires sont refroidis, le cas échéant réchauffés, par l'intermédiaire d'échangeurs d'équipement, qui échangent de la chaleur avec le fluide caloporteur qui circule dans le réseau principal.

Dans l'exemple représenté sur la Figure 1, le réseau principal comporte trois échangeurs d'équipement, à savoir un radiateur de refroidissement d'huile 34, un réchauffeur de carburant 36 monté parallèlement au refroidisseur d'huile 34 et un refroidisseur de gaz d'échappement 38 monté en série avec le refroidisseur d'huile 34 (voir Figure 1A). D'autres configurations série et/ou parallèle sont égalements possibles. Une canalisation d'huile 40 amène l'huile chaude en provenance du circuit d'huile jusqu'au radiateur de refroidissement d'huile, et une canalisation de sortie d'huile 42 ramène l'huile refroidie vers le circuit d'huile. De la même manière, une canalisation d'amenée de carburant 44 amène le carburant froid au réchauffeur de carburant 36 et une canalisation de sortie de carburant réchauffé 46 ramène le carburant vers le moteur. Une capsule thermostatique 48 permet d'interrompre la dérivation sur laquelle est monté le réchauffeur de carburant 36 en fonction de la température du carburant. De même, une canalisation 50 amène les gaz d'échappement chauds au refroidisseur de gaz d'échappement 38 et une canalisation de sortie 52 renvoie les gaz d'échappement refroidis à un collecteur d'admission. Le refroidisseur de gaz d'échappement 38 permet de diminuer la pollution du moteur. Il permet, en outre, de récupérer de la chaleur sur les gaz d'échappement, ce qui accélère la montée en température du moteur durant la phase de démarrage.

Les échangeurs 34, 36 et 38 ont été entourés d'un rectangle arrondi en traits tiretés 54 pour indiquer que ces équipements sont optionnels.

La boucle secondaire 4 comprend une canalisation de radiateur secondaire 56 sur laquelle sont montés une pompe de circulation secondaire 58 électrique et un radiateur secondaire 60. Elle comprend également une canalisation 62. De la même manière que le réseau principal 2, la boucle secondaire 4 peut comporter des radiateurs destinés à refroidir ou éventuellement à réchauffer des équipements secondaires du véhicule. Dans l'exemple représenté, le véhicule comprend un circuit de climatisation. Le condenseur 64 du circuit de climatisation est monté dans la boucle secondaire 4 (voir aussi Figure 1B). Il est refroidi par échange de chaleur avec le fluide caloporteur qui circule dans cette boucle.

Le véhicule est également équipé d'un refroidisseur d'air de suralimentation 66 (Figures 1 et 1B) qui permet d'abaisser la température de l'air préalablement à son introduction dans le moteur. Alors que, généralement, le refroidisseur d'air de suralimentation est un échangeur air-air, conformément à l'invention ce refroidisseur 66 est un refroidisseur air-liquide. L'air de suralimentation est refroidi par échange de chaleur avec le cycle de fluide caloporteur qui circule dans la boucle secondaire 4. Le condenseur de climatisation 64 et le refroidisseur d'air de suralimentation 66 sont montés en parallèle ou en série. Ces deux échangeurs ont été représentés entourés d'un rectangle arrondi en traits tiretés 68 pour indiquer qu'ils sont optionnels.

Le réseau principal 2 et la boucle secondaire 4 sont reliés par les moyens d'interconnexion 6 qui permettent d'isoler le réseau principal de la boucle secondaire ou, au contraire, d'assurer une circulation de fluide entre eux. Dans l'exemple représenté, les moyens d'interconnexion sont constitués par une vanne à quatre voies 70 et par une première vanne à trois voies 72 et une seconde vanne à trois voies 74. La vanne à quatre voies 70 et la première vanne à trois voies 72 sont intégrées au réseau principal 2. Elles sont montées sur la conduite 26.

Une première voie 70-1 de la vanne 70 est reliée à la canalisation de court-circuit 20, une deuxième voie 70-2 à la canalisation 26, du côté du moteur thermique 10, une troisième voie 70-3 est raccordée à une conduite 76 qui relie la vanne à quatre voies 70 à la seconde vanne à trois voies 74. Enfin, la quatrième voie 70-4 de la vanne 70 est raccordée à la partie de la canalisation 26 qui relie la vanne 70 et la vanne 72.

La vanne 72 comporte une première voie 72-1 reliée à la canalisation de radiateur principal 16, une seconde voie 72-2 reliée à la conduite 26 et une troisième voie 72-3 raccordée à la canalisation de radiateur secondaire 56.
Enfin, la deuxième vanne à trois voies 74 comporte une première voie 74-1 reliée à la canalisation 62, une seconde voie 74-2 reliée à la conduite 76 et une troisième voie 74-3 reliée à une conduite 78 raccordée en T à la canalisation 56.

Les vannes 70, 72 et 74 sont pilotées par des moyens sensibles à la température, tels que des sondes de température qui captent la température du fluide caloporteur en divers endroits du réseau principal et de la boucle secondaire 4.

Sur la Figure 1, le radiateur principal 18 et le radiateur secondaire 60 ont été représentés comme deux éléments séparés. Une réalisation de ce type est possible. Les deux échangeurs peuvent être disposés côte à côte ou, de préférence, l'un derrière l'autre, de manière à réduire l'encombrement sous capot. Lorsque les échangeurs sont disposés l'un derrière l'autre, ils peuvent faire partie d'un module d'échange de chaleur comprenant deux ou plus de deux échangeurs possédant des ailettes de refroidissement communes.

En variante et conformément à l'invention, le radiateur principal 18 et le radiateur secondaire 60 peuvent avantageusement faire partie d'un module d'échange de chaleur Amultifonction@. On désigne par là un module d'échange de chaleur comprenant deux ou plus de deux échangeurs de chaleur superposés de manière à être traversés entièrement ou partiellement par un même flux d'air. Chaque échangeur possède une boîte collectrice d'entrée et une boîte collectrice de sortie. La boîte collectrice de sortie du premier échangeur de chaleur communique avec la boîte collectrice d'entrée du second échangeur de chaleur par un orifice de passage. Des moyens de vanne permettent d'ouvrir ou de fermer cet orifice de passage en fonction de certains paramètres du système de gestion de l'énergie thermique, comme la température du fluide caloporteur en divers points du circuit. Les moyens de vanne permettent ainsi de mettre en service tout ou partie de la capacité des échangeurs et, par conséquent, de faire varier la capacité de refroidissement des échangeurs, de manière à l'adapter au mieux aux conditions de charge du moteur thermique.

On a représenté sur la Figure 2 une variante, désignée par la référence générale 70, des échangeurs d'équipement du réseau principal 2, et sur la Figure 3 une variante, désignée par la référence générale 72, des échangeurs d'équipement de la boucle secondaire 4 du système de gestion de l'énergie d'un moteur thermique représenté sur la Figure 1. Sur la Figure 1, l'échangeur 38 de refroidissement des gaz d'échappement est implanté dans le réseau principal. Cette disposition correspond à la disposition classique utilisée dans les circuits de refroidissement actuels. Au contraire, sur les Figures 2 et 3, le refroidisseur de gaz d'échappement 38 est implanté parmi les échangeurs d'équipement (rectangle en traits tiretés 72) de la boucle secondaire 4. Grâce à cette caractéristique, les gaz d'échappement sont encore mieux refroidis, ce qui conduit à réduire encore plus les émissions de polluants.

Avantageusement, le radiateur secondaire 60 est disposé devant le radiateur principal 18, de telle sorte qu'il Avoit@ l'air en premier. Le radiateur 60 est donc mieux refroidi que le radiateur principal 18 parce que l'air qui pénètre dans ce dernier s'est déjà échauffé en traversant le radiateur secondaire 60. Par suite, la température du fluide caloporteur dans la boucle secondaire 4 est plus basse que la température de ce même fluide de cycle dans le réseau principal 2. La boucle secondaire 4 constitue donc une boucle à basse température et le radiateur 60 un radiateur à basse température. De même, les échangeurs d'équipement 64 et 66 intégrés dans la boucle de refroidissement secondaire 4 constituent des échangeurs à basse température. Inversement, le radiateur principal 18 est un radiateur à haute température, le terme haute devant être entendu relativement à la température du fluide dans la boucle secondaire 4. Le réseau principal 2 constitue un réseau à haute température, et les échangeurs 34, 36 et 38 intégrés dans le réseau principal 2 constituent un groupe d'échangeurs 54 à haute température.

On a représenté sur la Figure 4 le système de gestion de l'énergie thermique des Figures 1 à 3 dans la configuration de démarrage à froid. Il est souhaitable que le moteur thermique 10 atteigne le plus rapidement possible sa température de fonctionnement normal après son démarrage. En effet, le moteur est conçu pour fonctionner à cette température, et notamment pour polluer moins l'atmosphère. C'est pourquoi le moteur n'est pas refroidi. Il est au contraire réchauffé, lorsque c'est possible, afin d'accélérer encore sa mise en température. Le thermostat ou la vanne thermostatique 30 est fermé. De même, la deuxième voie 70-2 de la vanne 70 est fermée. On délimite ainsi une boucle principale dans le réseau principal 2. Cette boucle comprend la canalisation de moteur thermique 8, la canalisation de chauffage 22 et la partie des conduites 26 et 28 qui relie ces deux canalisations. Dans le cas où le réseau principal comporte un ou plusieurs échangeurs d'équipement, comme schématisé par le rectangle arrondi en traits tiretés 54, la boucle principale comporte encore la branche 32 d'échangeurs d'équipement montée en parallèle à la canalisation de chauffage 22.

Les échangeurs d'équipement schématisés par le rectangle 54 peuvent comprendre, par exemple, les trois échangeurs 34, 36 et 38 représentés sur la Figure 1, ou encore les échangeurs 34 et 36 représentés sur la Figure 2. D'autres variantes sont également concevables. Le fluide de cycle caloporteur circule ainsi en circuit fermé. Si le chauffage du véhicule, c'est-à-dire l'aérotherme, n'est pas en fonctionnement, la totalité de l'énergie thermique dégagée par le moteur 10 sert au réchauffement du moteur. Si le réseau principal comporte un échangeur de refroidissement de gaz d'échappement 38, la chaleur des gaz d'échappement est, en outre, récupérée pour réchauffer encore davantage la température du fluide de cycle caloporteur et accélérer la mise en température du moteur 10. Par ailleurs, les voies 74-1 et 74-2 de la vanne 74, les voies 70-1 et 70-3 de la vanne 70 et les voies 72-1 et 72-3 de la vanne 72 sont ouvertes (les autres voies étant fermées).

Les moyens d'interconnexion 6 délimitent ainsi une boucle de circulation secondaire qui comprend la canalisation de radiateur et le radiateur principal 18 ou radiateur à haute température, la canalisation de court-circuit 20 et la partie de la conduite 28 reliant la canalisation de radiateur 16 et la canalisation de court-circuit 20, la canalisation 62 et la canalisation de radiateur secondaire ou radiateur basse température 60. La pompe de circulation électrique 58 fait circuler le fluide de cycle caloporteur dans la boucle secondaire dans le sens des aiguilles d'une montre, comme schématisé par les flèches 59. La boucle secondaire peut comprendre un ou plusieurs échangeurs d'équipement optionnels, comme schématisé par le rectangle représenté en traits tiretés 68. Ces échangeurs peuvent être, par exemple, les échangeurs 64 et 66 représentés sur la Figure 1, ou encore les échangeurs 64, 66 et 38 comme représenté sur la Figure 3. Il peut comprendre également d'autres échangeurs.

Dans cette configuration de démarrage à froid, la capacité de refroidissement du radiateur principal et du radiateur secondaire 60 s'additionnent pour refroidir les équipements du groupe 68. Lorsque le véhicule est équipé d'un système de climatisation, l'efficacité de cette dernière est augmentée grâce à l'efficacité du refroidissement du condenseur de climatisation 64. Si les échangeurs d'équipement 68 comprennent un radiateur de refroidissement de gaz d'échappement 38 (Figure 3), les gaz d'échappement sont mieux refroidis, ce qui conduit à réduire les émissions de polluants.

On a représenté sur la Figure 5 la configuration du système de gestion de l'énergie thermique dans la configuration de fonctionnement normal. Le thermostat 30 assure la régulation de la circulation du fluide de cycle caloporteur autour d'une température de consigne, par exemple 100°C. Lorsque la température du fluide est inférieure à 100°C, le thermostat 30 est fermé. La deuxième voie de la vanne à quatre voies 70 raccordée à la partie supérieure de la conduite 26 (selon la Figure 5) est également fermée. Le système se trouve donc dans une configuration exactement identique à la configuration de démarrage à froid représentée sur la Figure 4.

Au contraire, lorsque la température du fluide de cycle caloporteur dépasse la valeur de consigne, par exemple 100°C, le thermostat s'ouvre et le fluide chaud sortant du moteur thermique 10 se répartit dans les deux branches de la conduite 26. Une partie du fluide traverse l'aérotherme 24 et les échangeurs d'équipement 54. Une autre partie du fluide caloporteur se dirige par la partie inférieure de la conduite 28 (selon la figure) vers le radiateur principal 18, comme schématisé par la flèche 82. Cette flèche a été représentée en traits tiretés pour indiquer que la circulation est intermittente.

Lorsque le thermostat 30 est ouvert, la deuxième voie 70-2 de la vanne 70 est également ouverte, seule la quatrième voie 70-4 de cette vanne restant fermée. Le flux des deux fluides caloporteurs qui arrive par la canalisation 62 se répartit entre la canalisation de court-circuit 20 et la conduite 26, comme schématisé par les flèches 84 et 86. Le fluide froid qui traverse la canalisation de dérivation se remélange au fluide chaud sortant du moteur pour donner un fluide à température moyenne, donc refroidi. Le radiateur à haute température 18 contribue donc au refroidissement des équipements de la boucle à basse température 2. Une autre partie du fluide, comme schématisé par la flèche 86, est aspirée par la pompe de circulation 12 pour refroidir le moteur thermique 10. Cette fraction du débit est peu importante, de telle sorte que le moteur est peu refroidi. C'est pourquoi cette configuration n'est adaptée qu'à une faible charge du moteur thermique.

On a représenté sur la Figure 6 la configuration du système de gestion de l'énergie thermique correspondant à un fonctionnement critique, c'est-à-dire à une forte charge imposée au moteur 10. Dans cette configuration, la troisième voie 70-3 de la vanne 70 est fermée, tandis que la première voie 70-1, la deuxième voie 70-2 et la quatrième voie 70-4 sont ouvertes. La première voie 72-1 et la deuxième voie 72-2 de la vanne 72 sont ouvertes et la troisième voie 72-3 est fermée. La première voie 74-1 et la troisième voie 74-3 de la vanne 74 sont ouvertes et la deuxième voie 74-2 est fermée. Etant donné que la charge du moteur thermique est forte, la température du fluide caloporteur est en permanence supérieure à la valeur de consigne et le thermostat 30 est ouvert en permanence. Le fluide caloporteur se répartit dans les deux branches de la conduite 28. Une partie du fluide circule à travers l'aérotherme 24 et les échangeurs du groupe à haute température 54, l'autre partie du fluide traverse le radiateur à haute température 18. Après avoir été refroidi, le fluide retourne dans le moteur par la conduite 26 et la canalisation de moteur thermique 8. La circulation entre la vanne à quatre voies 70 et la vanne à trois voies 74 est interrompue. De même, la circulation entre la vanne à trois voies 72 et la pompe secondaire 58 est interrompue parce que la troisième voie de la vanne 72 est fermée. Le fluide circule donc dans deux boucles entièrement séparées.

Dans la boucle secondaire 4, le fluide caloporteur mis en circulation par la pompe secondaire 58 traverse le radiateur à basse température 60 et, éventuellement, les échangeurs d'équipement à basse température schématisés par le rectangle en traits tiretés 68, si de tels équipements existent. Ainsi, dans cette configuration, le radiateur principal 18 est utilisé exclusivement pour refroidir le réseau principal 2 et le radiateur à basse température 60 est utilisé exclusivement pour refroidir la boucle secondaire 4.

On a représenté sur la Figure 7 la configuration du système de gestion de l'énergie thermique du moteur 10 dans un cas de fonctionnement très critique, c'est-à-dire dans un cas de très forte charge du moteur. Dans cette configuration, le thermostat 30 est bien entendu ouvert en permanence, de telle sorte que le fluide de cycle caloporteur qui quitte le moteur thermique 10 se répartit entre la branche de chauffage 22 dans laquelle se trouve l'aérotherme 24 et, éventuellement, la branche d'échangeurs d'équipement 32 d'une part, et la partie inférieure (selon la figure) de la conduite 26 reliée à la canalisation de court-circuit 20 et à la canalisation de radiateur 16. Dans cette configuration, la première voie de la vanne à quatre voies 70 reliée à la canalisation de court-circuit 20 est fermée. Toutes les autres voies de la vanne à quatre voies 70, à savoir les deuxième, troisième et quatrième voies sont ouvertes, les trois voies de la première vanne 72 et les trois voies de la deuxième vanne à trois voies 74 sont également toutes ouvertes.

Le radiateur à basse température secondaire 60 assure le refroidissement des équipements à basse température de la boucle secondaire 4 (rectangle en traits tiretés 68). Toutefois, une partie du fluide ayant traversé les échangeurs d'équipement, par exemple le condenseur de climatisation 64 et le radiateur d'air de suralimentation 66, est acheminée par la canalisation 76, puis la conduite 26 vers le moteur thermique 10. Cette fraction du fluide relativement froid contribue au refroidissement du moteur. Inversement, une partie du fluide refroidi après sa traversée du radiateur à haute température 18 est acheminée par la canalisation 56 vers le radiateur à basse température 60 dans lequel elle se refroidit encore davantage. Ainsi, dans cette configuration, la priorité est donnée au refroidissement du moteur. Le radiateur principal à haute température 18 est utilisé exclusivement pour le refroidissement du moteur, tandis que le radiateur secondaire à basse température 60 sert à la fois au refroidissement des équipements de la boucle secondaire à basse température et, complémentairement, au refroidissement du moteur thermique 10.

Cette configuration est particulièrement avantageuse si le radiateur principal à haute température 18 n'est dimensionné pour dissiper, au maximum, qu'une partie de la puissance thermique maximale rejetée dans l'eau par le moteur, par exemple 80%. Pendant le fonctionnement normal ou le fonctionnement à forte charge du moteur, le radiateur principal suffit pour assurer le refroidissement. En revanche, en cas de très forte charge du moteur, le radiateur à basse température assure un complément de refroidissement qui permet d'évacuer la totalité de la puissance thermique dégagée par le moteur. Le radiateur 18 à haute température peut être ainsi plus petit et moins coûteux. Son encombrement sous le capot du véhicule est diminué. D'autre part, le radiateur secondaire à basse température peut être dimensionné plus généreusement, ce qui améliore les performances de refroidissement des échangeurs du groupe à basse température 68, en particulier du condenseur de climatisation.

Sur les Figures 8 et 9, le système de gestion de l'énergie thermique d'un moteur 10 de véhicule automobile est constitué, d'une part, d'un réseau principal, désigné par la référence générale 2, et d'une boucle secondaire, désignée par la référence générale 4, et de moyens d'interconnexion, désignés par la référence générale 6, disposés entre le réseau principal et la boucle secondaire 4.

Le réseau principal 2 comprend une canalisation de moteur 8 raccordée au moteur thermique 10 du véhicule et une pompe 12, mécanique ou électrique, qui alimente le circuit de refroidissement du moteur (flèche 14) en fluide caloporteur. Le réseau principal comprend également une canalisation de radiateur 16 sur laquelle est monté un radiateur principal 18 qui sera décrit plus en détail ultérieurement. Une canalisation de court-circuit 20, montée en parallèle à la canalisation de radiateur 16, permet de court-circuiter le radiateur 18, comme schématisé par la flèche 21.

Le réseau principal 2 comprend également une canalisation de chauffage 22 sur laquelle est monté un aérotherme 24 et une vanne thermostatique à trois voies désignée par la référence générale 30. La vanne 30 comporte une entrée 30-1 reliée à la canalisation de moteur 8 et deux sorties, 30-2 et 30-3, reliées respectivement à la canalisation de court-circuit 20 et à la canalisation de radiateur de refroidissement 16. La vanne à trois voies pourrait être remplacée par une vanne à quatre voies comportant une quatrième voie 30-4 reliée à la canalisation de chauffage 22, comme schématisé en traits pointillés sur les Figures 8 et 9.

La boucle secondaire 4 comprend une canalisation de radiateur secondaire 56 sur laquelle sont montés une pompe de circulation secondaire 58 électrique et un radiateur secondaire 60. Elle comprend également un ou plusieurs échangeurs d'équipement désignés par la référence générale 68, destinés à refroidir ou éventuellement à réchauffer des équipements secondaires du véhicule. Ces échangeurs peuvent être constitués, comme décrit en référence aux Figures 1, 1A et 1B, par exemple d'un refroidisseur d'air de suralimentation ou d'un condenseur faisant partie d'un circuit de climatisation de l'habitacle du véhicule automobile.

Le réseau principal et la boucle secondaire 4 sont reliés par des moyens d'interconnexion désignés par la référence générale 6 qui permettent d'isoler le réseau principal 2 de la boucle secondaire ou, au contraire, d'assurer une circulation du fluide caloporteur entre ces deux circuits. Dans l'exemple représenté sur les Figures 8 et 9, les moyens d'interconnexion sont constitués par deux vannes à quatre voies 150.

Conformément à une caractéristique de l'invention, le radiateur principal 18 est scindé en deux parties, à savoir une partie 144 constituant une section d'échange de chaleur à haute température utilisée pour le refroidissement du réseau principal, et particulièrement du moteur thermique 10, et une section d'échange de chaleur 146, dite section attribuable, constituée par les tubes de l'échangeur 18 qui n'appartiennent pas à la section 144. La section d'échange de chaleur à haute température est intégrée en permanence au réseau principal 2. Elle est montée sur la canalisation 16 décrite précédemment. Au contraire, la section d'échange de chaleur attribuable 146 peut être intégrée, en fonction de la position des moyens d'interconnexion 6, c'est-à-dire des deux vannes à quatre voies 150, soit au réseau principal à haute température 2, soit à la boucle secondaire à basse température 4.

Le fonctionnement du système de gestion de l'énergie thermique représenté sur les Figures 8 et 9 sera maintenant décrit. Au démarrage du véhicule, le fluide de refroidissement est froid. Il est souhaitable de parvenir à une mise en température rapide du moteur. C'est la raison pour laquelle ce dernier n'est pas refroidi. La voie 30-3 de la vanne thermostatique 30 est fermée et la voie 30-2 est ouverte, de telle sorte que le fluide caloporteur circule en boucle fermée, en passant par la canalisation de court-circuit 20 sans être refroidi. En outre, l'aérotherme 24 est alimenté en permanence en fluide caloporteur chaud sortant du moteur 10 afin de réchauffer l'habitacle du véhicule automobile. Dans la variante de réalisation comportant une vanne à quatre voies représentée en traits tiretés sur les Figures 8 et 9, il est possible d'interrompre la circulation du fluide caloporteur dans l'aérotherme 24 en fermant la voie 30-4 de la vanne à quatre voies. La totalité du fluide caloporteur transite alors par la canalisation de court-circuit 20.

Lorsque le fluide caloporteur a atteint une certaine température, par exemple 90°C, le fluide caloporteur circule par intermittence entre la canalisation de court-circuit 20 et la canalisation de radiateur de refroidissement 16, de manière à être refroidi dans la section d'échange de chaleur à haute température 144. Dans cette configuration de démarrage à froid et de charge faible ou moyenne, les vannes 150 sont dans la position représentée sur la Figure 8. La section d'échange de chaleur attribuable 146 est montée en parallèle avec le radiateur de refroidissement secondaire à basse température 60. Les capacités de refroidissement de la section 146 et du radiateur 60 s'ajoutent, ce qui permet un meilleur fonctionnement des échangeurs d'équipement 68, par exemple du circuit de climatisation.

Au-dessus d'une certaine température critique T_{c} du fluide de refroidissement du moteur 10, par exemple 105°C, il est nécessaire de refroidir plus énergiquement le réseau principal 2. Les moyens d'interconnexion, c'est-à-dire les deux vannes à quatre voies 150, sont alors actionnés de manière à obtenir la configuration de forte charge représentée sur la Figure 9 correspondant à un fonctionnement supérieur à la température critique T_{c}. Dans cette configuration, comme on l'a mentionné précédemment, la section d'échange de chaleur à haute température 144 reste intégrée au réseau principal 2. Toutefois, la section attribuable est montée en parallèle à la section 144 de telle sorte que la totalité de la capacité de refroidissement de l'échangeur principal bénéficie au réseau principal 2. A cet effet, les vannes 150 sont pilotées de telle manière que le fluide qui circule dans la boucle secondaire 4 transite par une canalisation de dérivation 152 qui contourne la section d'échange de chaleur attribuable 146 et, simultanément, cette section attribuable 146 est montée en parallèle à la section 144 sur la canalisation d'échangeur de refroidissement 16 (flèche 156).

Dans les deux configurations qui viennent d'être décrites en référence aux Figures 8 et 9, les vannes 150 déterminent deux réseaux séparés, isolés l'un de l'autre. La section d'échange de chaleur attribuable 146 est attribuée soit au réseau principal 2, soit à la boucle secondaire 4, mais elle n'est jamais attribuée simultanément aux deux. Toutefois, comme on le verra dans d'autres modes de réalisation, la section attribuable peut être commune au réseau principal et à la boucle secondaire.

Le passage d'une configuration à une autre des vannes 150 est assuré par des moyens de commande 151 qui agissent en fonction d'au moins un paramètre de contrôle de l'état de charge du moteur 10 du véhicule. Dans l'exemple décrit, ce paramètre de contrôle est la température du fluide de refroidissement du moteur. Toutefois, ce paramètre pourrait être également la charge ou le régime du moteur, la puissance rejetée par le moteur sur le fluide de refroidissement, ou encore une combinaison de plusieurs de ces paramètres. Les moyens de commande 151 peuvent être pilotés électriquement, pneumatiquement, ou encore thermostatiquement.

On a représenté sur les Figures 10 et 11 un autre exemple de réalisation d'un système de gestion de l'énergie thermique d'un moteur 10 de véhicule automobile. Comme dans l'exemple décrit en référence aux Figures 8 et 9, il est constitué d'un réseau principal 2 et d'une boucle secondaire 4 reliés par des moyens d'interconnexion désignés de manière générale par la référence 6. La constitution du réseau principal et de la boucle secondaire est identique et les mêmes références ont été utilisées pour désigner les mêmes éléments. En conséquence, ils ne seront pas décrits en détail. L'exemple décrit sur les Figures 10 et 11 se distingue par le fait que les moyens d'interconnexion sont constitués par une vanne unique 160 dont la constitution a été détaillée sur les Figures 12, 13 et 14. La Figure 12 est une vue extérieure en perspective de la vanne 160. La vanne comporte un corps désigné par la référence générale 162 constitué d'une paroi latérale cylindrique 164 et d'un fond 166 (Figure 14). Le corps 162 est de forme générale de révolution autour d'un axe XX. Il comporte six tubulures 168 qui débouchent axialement dans un logement cylindrique 170 d'axe XX. Dans le mode de réalisation représenté, les axes 172 des tubulures 168 sont coplanaires. En outre, ces tubulures sont réparties à 60° l'une de l'autre, à la périphérie de la paroi cylindrique latérale 164. Toutes ces tubulures débouchent sur la paroi cylindrique 164. Aucune n'est située sur la paroi de fond 166.

A l'intérieur du logement cylindrique 170, est logé un organe rotatif 174 de réglage dont le diamètre correspond sensiblement au diamètre interne du logement cylindrique 170. L'organe de réglage 174 se prolonge par une tige 176 dirigée suivant l'axe XX. Cette tige passe au travers d'une ouverture centrale du couvercle 178 de forme circulaire qui est vissé sur une bride 180 du corps 162 de la vanne par l'intermédiaire de vis de fixation 182 avec interposition d'un joint torique d'étanchéité 184 (Figure 14). L'organe rotatif 14 peut être entraîné en rotation autour de l'axe XX par des moyens de motorisation (non représentés) qui peuvent être constitués, par exemple, par un moteur de type pas à pas susceptible d'amener l'organe rotatif 174 dans une multiplicité de positions différentes, soit par incréments successifs, soit de manière continue.

L'organe rotatif 174 comporte des poches 186, trois dans l'exemple représenté, aptes à mettre les tubulures 168 en communication l'une avec l'autre. Par une rotation de l'organe rotatif d'un angle de 60° dans un sens ou dans l'autre, on peut mettre en communication deux tubulures adjacentes différentes.

Sur la Figure 10, le système de gestion de l'énergie thermique du moteur 10 a été représenté en configuration de démarrage et de charge modérée. Dans cette configuration seule, la section d'échange à haute température 144 fait partie du réseau principal 2. Le fluide de refroidissement transite par la canalisation de radiateur 16 (flèche 23) à travers la section d'échange de chaleur à haute température 144 dont il ressort par la canalisation 190 reliée à la voie 160-1 de la vanne à six voies 160. Il en ressort par la voie 160-2 reliée à l'autre branche de la canalisation de radiateur de refroidissement 16. Le fluide caloporteur retourne alors vers le moteur 10, comme schématisé par la flèche 192.

Dans cette configuration, la section d'échange de chaleur attribuable 146 est intégrée à la boucle secondaire 4. Le fluide de refroidissement mis en circulation par la pompe électrique secondaire 58 traverse l'échangeur thermique 68, puis le radiateur de refroidissement à basse température 60. Il en ressort par la canalisation 194 reliée à la voie d'entrée 160-5 de la vanne à six voies 160. Il ressort de la vanne par la voie de sortie 160-6 reliée à la canalisation 196 qui pénètre dans la section d'échange de chaleur à haute température 146. Après avoir traversé la section à haute température 146, le fluide de refroidissement ressort par la canalisation 198 (flèche 199) pour pénétrer par la voie d'entrée 160-3 dans la vanne 160 et en ressortir par la voie de sortie 160-4 reliée à la pompe de circulation 58. On constate ainsi que l'échangeur à basse température 60 et la section d'échange de chaleur 146 sont montés en série et sont parcourus successivement par le fluide de refroidissement.

On a représenté sur la Figure 11 la configuration du système de la Figure 10 au-dessus de la valeur critique T_{c}, par exemple 105°C, de la température du fluide de refroidissement du moteur 10. Dans cette configuration, le fluide de refroidissement pénètre par la canalisation de refroidissement 16 (flèche 23) dans la section d'échange de chaleur à haute température 144. Il en ressort par la canalisation 190, comme précédemment, reliée à la voie 160-1 de la vanne à six voies 160. Toutefois, dans cette configuration, l'organe rotatif de réglage 174 a pivoté de 60° par rapport à la position angulaire qu'il occupait dans la configuration précédente, de telle sorte que la voie 160-1 est maintenant reliée à la voie 160-6 et à la canalisation 196 raccordée à l'entrée de la section d'échange à haute température 146. Le fluide quitte la section 146 par la canalisation 198 reliée comme précédemment à la voie 160-3 de la vanne 160. Toutefois, dans cette configuration, la sortie du fluide de refroidissement se fait par la voie 160-2 reliée à la canalisation 16 par laquelle le fluide de refroidissement retourne vers la pompe 12 et le moteur 10. On constate ainsi que dans cette configuration la section d'échange de chaleur à haute température 144 et la section attribuable 146 sont parcourues successivement par le fluide de refroidissement et sont toutes les deux intégrées au réseau principal 2.

La boucle secondaire 2 ne possède, comme capacité de refroidissement, que celle de l'échangeur à basse température 60. A la sortie de cet échangeur, le fluide circule par la canalisation 194 jusqu'à la voie 160-5 de la vanne reliée à la voie de sortie 160-4 directement connectée à la pompe électrique 58. Ainsi, dans cet exemple de réalisation également, le fluide caloporteur circule dans des circuits isolés l'un de l'autre.

On a représenté sur les Figures 15 à 17 une variante de réalisation du système de gestion de l'énergie thermique d'un moteur représenté sur les Figures 10 à 14. Dans ce dernier mode de réalisation, le fluide caloporteur de refroidissement du moteur, après avoir traversé la section d'échange de chaleur à haute température 144, transite nécessairement par la vanne 160, et ceci quelle que soit la configuration (charge modérée ou forte charge du système) par la canalisation 190 (voir Figures 10 et 11). Dans le mode de réalisation des Figures 15 à 17, au contraire, le fluide de refroidissement du moteur, après avoir traversé la section d'échange de chaleur à haute température, retourne directement vers le moteur par la canalisation de radiateur de refroidissement 16 (voir flèche 211).

Sur les Figures 15 et 16, seule la partie inférieure du système a été représentée, la partie supérieure étant identique à celle qui a été décrite précédemment en référence aux Figures 10 et 11.

Dans la configuration de démarrage à froid et de charge modérée représentée sur la Figure 15, dans laquelle seule la section d'échange de chaleur à haute température 144 est intégrée au réseau principal 2, le fluide provenant de la sortie moteur par la canalisation 16 (flèche 213) pénètre dans la section d'échange 144 puis, après avoir traversé cette section, retourne directement vers le moteur par l'autre branche de la canalisation de refroidissement 16. On remarquera que la canalisation d'arrivée 16 est reliée à la vanne 210 à six voies par la canalisation 214. Toutefois, dans cette configuration, la voie 210-6 de la vanne 210 est fermée, de telle sorte que la canalisation 214 constitue un cul-de-sac par lequel le fluide de refroidissement ne peut pas circuler.

En ce qui concerne la boucle secondaire 4, le fluide de refroidissement mis en circulation par la pompe à eau électrique 58 se répartit entre le condenseur 64 du circuit de climatisation de l'habitacle du véhicule automobile et le radiateur de refroidissement du carburant 65. La partie du fluide de refroidissement qui a traversé le condenseur 64 pénètre dans la vanne 210 par sa voie 210-3 qui est reliée, dans la position de l'organe rotatif de réglage 174 correspondant à cette configuration et représentée sur la Figure 15, à la voie 210-2 de la vanne. Le fluide de refroidissement pénètre par la canalisation 216 dans la section d'échange de chaleur attribuable 146, puis retourne par la canalisation 218 vers la voie 210-5 de la vanne 210. Le fluide ressort par la voie 210-4 par la canalisation 220 et pénètre dans le radiateur 60 à basse température. Dans l'exemple représenté, le radiateur 60 est divisé en deux passes 60-1 et 60-2. Le fluide caloporteur parcourt d'abord la passe 60-1 de droite vers la gauche selon la figure, et pénètre dans le radiateur d'air de suralimentation 66 par l'intermédiaire de la canalisation 222. Après avoir traversé le radiateur d'air de suralimentation, le fluide de refroidissement traverse la seconde passe 60-2 du radiateur à basse température 60 et le cycle reprend.

La fraction du fluide de refroidissement de la boucle secondaire 4 à basse température qui a traversé l'échangeur de refroidissement du carburant 65 traverse un vase d'expansion à basse température 226 par l'intermédiaire de la canalisation 228 avant de regagner la passe 60-2 de l'échangeur 60 par la canalisation 230.

Dans la configuration de forte ou très forte charge représentée sur la Figure 16, le fluide de refroidissement en provenance du moteur par la canalisation 16 (flèche 213) circule en parallèle dans la section d'échange de chaleur à haute température 144 et dans la section attribuable 146. Il traverse directement la section 144 par la canalisation 16 et la section 146 en transitant par la vanne à six voies 210. Il pénètre par la voie 210-1 et en ressort par la voie 210-2 et la canalisation 216 avant de retourner vers le moteur par la canalisation de retour de la branche de refroidissement (flèche 211).

Dans cette configuration de forte ou très forte charge, le fluide de refroidissement de la boucle secondaire 4, après avoir traversé le condenseur 64, pénètre dans la vanne 210 par la voie 210-3 et en ressort par la voie 210-4 pour regagner, par la canalisation 220, la passe 60-1 de l'échangeur à basse température 60. Puis le fluide caloporteur traverse le radiateur d'air de suralimentation 66 dans lequel il pénètre par la canalisation 222 et dont il ressort par la canalisation 224 pour traverser de gauche à droite selon la figure la passe 60-2 du radiateur 60. Le cycle reprend, la circulation de la fraction du fluide de refroidissement qui traverse le radiateur de refroidissement du carburant 65 et le vase d'expansion à basse température 226 n'est pas modifiée.

Une canalisation de dérivation réglable 223, interposée entre les canalisations 222 et 224, permet de régler la quantité de fluide de refroidissement qui traverse le radiateur d'air de suralimentation 66. Toutefois, la canalisation de dérivation réglable 223 pourrait être supprimée dans une variante de réalisation.

Compte tenu du fait que la voie 210-6 de la vanne 210 est fermée en permanence dans l'exemple de réalisation décrit en référence aux Figures 15 et 16, elle peut être supprimée purement et simplement. On peut ainsi concevoir une vanne comportant cinq voies seulement, comme représenté sur la Figure 17. Ces voies ont été référencées 240-1 à 240-5 et la voie 210-6 a été supprimée. En conséquence, la forme de l'organe rotatif de réglage de la circulation du fluide de refroidissement 174 a été modifiée. Cet organe ne comporte que deux poches 186 au lieu de trois dans l'exemple décrit précédemment. Toutefois, cette modification n'est pas indispensable et l'organe rotatif pourrait comporter également trois poches 186, par exemple dans un souci de standardisation des fabrications.

On a représenté sur les Figures 18 et 19 encore une autre variante de réalisation d'un système de gestion de l'énergie thermique d'un moteur de véhicule automobile conforme à la présente invention. Ce système est similaire à celui qui a été décrit et représenté en référence aux Figures 10 et 11. Il s'en distingue essentiellement par le fait que la vanne qui réalise l'interconnexion entre le réseau principal 2 et la boucle secondaire 4 comporte plusieurs niveaux, deux dans l'exemple représenté, au lieu d'un seul dans le mode de réalisation des Figures 10 et 11. Les tubulures de cette vanne, désignée dans son ensemble par la référence 250, sont réparties sur deux niveaux, à savoir un niveau inférieur désigné par la référence 254 et un niveau supérieur désigné par la référence 252 (voir Figures 18 et 19). Dans un souci de clarté du dessin, les niveaux 252 et 254 ont été représentés séparés l'un de l'autre. Il doit toutefois être entendu qu'il s'agit là d'une représentation schématique. Dans la réalité, ces deux niveaux sont disposés l'un au-dessus de l'autre, comme on l'expliquera plus en détail dans la suite de la présente description.

On a représenté sur les Figures 20 à 25 différentes vues extérieures de la vanne de commande 250. La Figure 20 est une vue extérieure de la vanne selon un plan perpendiculaire à son axe longitudinal XX, la Figure 21 est une vue de gauche de la vanne représentée sur la Figure 20, la Figure 22 est une vue arrière de la vanne représentée sur la Figure 20. Les Figures 23 et 24 sont deux vues en perspective représentant la vanne 250 sous deux angles opposés. La Figure 23 représente la partie avant de la vanne, c'est-à-dire le couvercle de cette dernière, tandis que la Figure 24 représente la vanne vue par l'arrière, c'est-à-dire par le fond de son corps 2.

La vanne comporte un corps cylindrique 362 limité par une paroi de fond 366 et une paroi latérale cylindrique 364 d'axe XX. La paroi latérale cylindrique 364 délimite un logement cylindrique 370 fermé par un couvercle 218 qui est fixé par des vis 222 (quatre dans l'exemple représenté) sur une bride ou collerette 220 faisant partie du corps 362. Un joint d'étanchéité, par exemple un joint torique 324, est interposé entre le couvercle et la bride.

Comme on peut le voir sur les diverses figures, le corps 362 comporte sept tubulures d'entrée et/ou de sortie. Ces tubulures ont été désignées par les références 261 à 267. Toutes ces tubulures sont raccordées à la paroi latérale cylindrique 364 du corps. Quatre tubulures, à savoir les tubulures 261 à 264, appartiennent au niveau inférieur 254 de la vanne 250. En d'autres termes, elles sont disposées à proximité du fond 366. Les tubulures 265, 266 et 267 appartiennent au niveau supérieur 252. En d'autres termes, elles sont plus proches de la collerette 220 et du couvercle 218.

Les Figures 25 et 26, d'une part, 29 et 30, d'autre part, sont des vues en coupe de la vanne 250 selon des plans perpendiculaires à l'axe longitudinal XX de cette dernière. Les Figures 25 et 29 correspondent à des plans de coupe pris dans le niveau supérieur de la vanne, tandis que les coupes des Figures 26 et 30 passent par le plan inférieur 254 de la vanne.

Les Figures 25 et 26 représentent la vanne dans la configuration de faible charge qui correspond à la représentation de la Figure 18, tandis que les Figures 29 et 30 la représentent dans la configuration de forte charge qui correspond à la Figure 19. Les Figures 27 et 28, d'une part, 31 et 32, d'autre part, sont des vues en coupe de la vanne 250 par des plans incluant l'axe longitudinal XX. Les Figures 27 et 28 correspondent à une configuration de charge partielle ou faible charge, tandis que les Figures 31 et 32 correspondent à une configuration de forte charge.

Un organe rotatif, désigné dans son ensemble par la référence générale 274, est disposé tournant à l'intérieur du logement cylindrique 370 du corps 362. Il est monté tournant autour de l'axe longitudinal XX de la vanne 250. Il comprend un corps massif de forme générale cylindrique d'axe XX qui se prolonge par une tige 226 dirigée suivant l'axe XX et qui passe au travers d'une ouverture centrale du couvercle 218 (Figure 28). L'organe rotatif est apte à être entraîné en rotation autour de l'axe XX par des moyens de motorisation non représentés, susceptibles de l'amener dans des positions angulaires correspondant aux différentes configurations du système de gestion de l'énergie thermique de l'invention.

Trois poches ont été formées à l'intérieur du corps cylindrique 274. Ces poches ont été désignées par les références 284, 286 et 288. La poche 284 s'étend sur le niveau inférieur et le niveau supérieur et elle est apte à mettre en communication les tubulures 264 et 265 l'une avec l'autre. Elle est également apte à communiquer avec la tubulure 261.

La poche 286 s'étend également sur les deux niveaux inférieur 254 et supérieur 252. Elle présente sensiblement une forme de L. Elle est apte à mettre en communication les tubulures 261 et 266, ainsi que les tubulures 262 et 263.

La troisième poche 288 est située uniquement au niveau supérieur 252 du corps de l'organe rotatif 274. Elle est apte à mettre en communication les tubulures 266 et 267. Enfin, l'organe rotatif de réglage comporte un canal traversant 290 qui, dans l'exemple représenté, le traverse diamétralement. Ce canal est destiné à faire basculer une partie de l'un des circuits dans l'autre. Il est situé au niveau inférieur 254 de l'organe rotatif 274 (Figure 26).

La Figure 18 correspond à la configuration du système de gestion de l'énergie thermique pour une configuration de faible charge, par exemple une configuration dans laquelle un paramètre tel que la température du fluide de refroidissement du moteur thermique 10 est inférieure à une valeur critique T_{c}, par exemple 105°C. Dans cette configuration, le radiateur de refroidissement à haute température est constitué uniquement par la section d'échange de chaleur à haute température 144 faisant partie du second rang de tubes d'échange de chaleur du module d'échange de chaleur décrit précédemment. Par conséquent, la section d'échange de chaleur attribuable, qui complète le second rang de tubes du module d'échange de chaleur, fait partie du circuit de refroidissement à basse température. La vanne thermostatique à trois voies 30 est orientée de telle manière que le fluide de refroidissement est dirigé vers la tubulure 264 appartenant au niveau inférieur 254 de la vanne de commande 250. Le fluide de refroidissement passe du niveau inférieur 254 au niveau supérieur 252 par la poche 284 qui, comme on l'a précédemment exposé, permet de mettre ces deux niveaux en communication l'un avec l'autre. Le fluide ressort par la tubulure 265, qui constitue alors une tubulure de sortie, pour être dirigé vers la section d'échange de chaleur à haute température 144. Après avoir été refroidi, le fluide regagne classiquement le moteur 10, et la circulation du fluide de refroidissement se répète.

En ce qui concerne le circuit de refroidissement à basse température, le fluide de refroidissement mû par la pompe à basse température 58 traverse l'échangeur thermique 68 et pénètre par la tubulure 263, qui constitue alors une tubulure d'entrée, dans le niveau inférieur 254 de la vanne de commande 250 de l'invention. Le fluide traverse l'organe rotatif 274 grâce au canal traversant 290 et débouche dans la tubulure 261 formant une tubulure de sortie.

Le fluide pénètre alors dans la section d'échange de chaleur attribuable 146 puis, après avoir traversé cette section d'échange de chaleur, pénètre dans le niveau supérieur 252 de la vanne de commande par la tubulure 267. Dans cette configuration du circuit de refroidissement, l'organe rotatif 274 est orienté angulairement de telle manière que la poche 286 se trouve en regard de la tubulure d'entrée 267. Comme on l'a expliqué précédemment, la poche 286 permet de faire passer le fluide d'un niveau à l'autre, en l'occurrence du niveau supérieur 252 au niveau inférieur 254. Le fluide ressort donc par la tubulure 262, qui constitue alors une tubulure de sortie, pour pénétrer dans l'échangeur de chaleur à basse température 60. Le fluide répète alors le même circuit.

On a représenté sur la Figure 19 le système de gestion de l'énergie thermique de l'invention dans une configuration de charge forte ou très forte, par exemple une configuration dans laquelle la température du fluide de refroidissement est supérieure à une valeur critique T_{c}, par exemple 105°C. Dans cette configuration, il est nécessaire de refroidir plus énergiquement le moteur thermique 10. A cet effet, il est nécessaire de transférer la capacité de refroidissement attribuable 146 du circuit de refroidissement de la boucle de refroidissement à basse température 4 au réseau principal 2.

La vanne thermostatique à trois voies est orientée de telle manière que le fluide circule vers la tubulure d'entrée 264 faisant partie du niveau inférieur 254 de la vanne 250. Dans cette configuration, l'orientation de l'organe 274 est différente. La poche 284 se trouve en regard des tubulures 264 et 265 mais elle met également en communication la tubulure d'entrée 264 avec la tubulure 261. Il y a donc une tubulure d'entrée, à savoir la tubulure 264, et deux tubulures de sortie, à savoir les tubulures 261 et 265. Dans cet exemple, les tubulures ne sont pas mises en communication deux à deux exclusivement, mais une tubulure est mise simultanément en communication avec deux tubulures différentes. Le fluide de refroidissement ressort du niveau supérieur 252 par la tubulure de sortie 265 pour traverser la section d'échange de chaleur à haute température 144 mais, en outre, une partie du fluide de refroidissement ressort par la tubulure de sortie 261 pour traverser la section d'échange de chaleur attribuable 146 qui est ainsi mise en parallèle avec la section d'échange de chaleur à haute température 144. Ainsi, les capacités de refroidissement 144 et 146 mises en parallèle l'une avec l'autre s'additionnent, ce qui permet de refroidir plus énergiquement le moteur thermique 10 du véhicule automobile. En ce qui concerne le circuit de refroidissement à basse température (boucle secondaire 4), le fluide de refroidissement est mis en circulation par la pompe électrique à basse température 58 et traverse l'échangeur thermique 68, puis pénètre par la tubulure d'entrée 263 dans le niveau inférieur 254 de la vanne de commande 250, dans l'orientation angulaire de l'organe rotatif 274 représenté sur les Figures 29, 30, 31 et 32. La poche 286 met en communication la tubulure 263 avec la tubulure 262, de telle sorte que le fluide pénètre dans la section d'échange de chaleur à basse température. Après avoir traversé la section d'échange de chaleur attribuable 146, le fluide pénètre dans la vanne 250 par la tubulure d'entrée 266 située au niveau supérieur de la vanne, puis dans la poche 288, et ressort par la tubulure 267 constituant une tubulure de sortie avant de revenir, de manière classique, vers la pompe de circulation à haute température pour traverser à nouveau le moteur thermique du véhicule. La même circulation du fluide se répète alors.

On a représenté sur les Figures 33 à 37 encore un autre mode de réalisation d'un système de gestion de l'énergie thermique d'un moteur de véhicule automobile. Ce système comprend, comme les précédents, un réseau principal 2 et une boucle secondaire 4 reliés par des moyens d'interconnexion constitués, dans l'exemple, par deux vannes 300. Dans cet exemple, le radiateur principal 18, ou radiateur à haute température, est d'un seul tenant. Il n'est pas scindé en une section à haute température et une section attribuable, comme décrit dans certains modes de réalisation précédents. Le radiateur secondaire ou radiateur à basse température 60 est lui aussi d'un seul tenant. Les radiateurs 18 et 60 peuvent être réalisés sous la forme de radiateurs séparés. Ils peuvent être, comme dans l'exemple représenté, disposés l'un derrière l'autre et traversés par un même flux d'air, comme schématisé par les flèches F. Cette disposition présente l'avantage de réduire l'encombrement de l'ensemble. Dans ce cas, le radiateur à basse température 60 est disposé à l'avant du radiateur 18 par rapport au sens de circulation du flux d'air F afin d'être mieux refroidi.

Les échangeurs 18 et 60 peuvent également être constitués sous la forme d'un module d'échange de chaleur comportant des ailettes de refroidissement communes. Un rang de tubes du module constitue alors le radiateur à haute température, tandis que l'autre rang de tubes constitue le radiateur à basse température. Toutefois, dans d'autres réalisations, le radiateur à basse température (et/ou le radiateur à haute température) peut être constitué d'un rang de tubes et d'une fraction de l'autre rang de tubes, de manière à augmenter sa capacité de refroidissement. Les radiateurs 18 et 60 ou les rangs de tubes correspondants d'un module d'échange de chaleur sont montés en parallèle aux bornes des vannes à deux voies 300.

On a représenté sur la Figure 34 une vue de face et sur la Figure 35 une vue en coupe d'un module d'échange de chaleur apte à faire partie du système représenté sur la Figure 3. Ce module comporte deux rangs de tubes, des boîtes collectrices d'entrée 302 et de sortie 304 situées aux extrémités des rangs de tubes et séparées par une cloison mitoyenne 306. Des tubulures d'entrée 308 raccordées aux boîtes collectrices d'entrée 302 permettent l'entrée du fluide de refroidissement dans les boîtes collectrices, comme schématisé par les flèches 310, tandis que des tubulures de sortie 312 raccordées aux boîtes collectrices de sortie 304 permettent la sortie du fluide de refroidissement hors des boîtes collectrices, comme schématisé par les flèches 314 (Figure 35). Deux orifices de passage 316 sont prévus dans la cloison de séparation 306. Les orifices 316 peuvent être ouverts ou fermés par des clapets 318 montés sur des tiges 320 mues par des actionneurs 322. L'actionneur peut être constitué par un vérin thermique composé d'un élément à dilatation de cire actionné par une thermistance.
On a représenté sur la Figure 36 une vue en coupe d'un module d'échange de chaleur similaire à celui des Figures 34 et 35, mais dans lequel le radiateur à basse température 60 occupe la totalité du premier rang de tubes et la partie supérieure du second rang de tubes. L'échangeur à haute température 18 occupe, pour sa part, la partie inférieure du second rang de tubes. Ainsi, dans cette réalisation, la capacité de refroidissement de l'échangeur à basse température est supérieure à celle de l'échangeur à haute température. Une canalisation d'arrivée du fluide à basse température 56 est reliée à la partie supérieure du second rang de tubes, tandis que la sortie du fluide à basse température est reliée à la partie inférieure du premier rang de tubes. L'arrivée et la sortie de la canalisation de radiateur de refroidissement 16, raccordées respectivement à la sortie et à l'entrée du bloc moteur, sont raccordées à la partie inférieure du second rang de tubes. Les moyens d'intercommunication (vanne 300) sont montés en parallèle respectivement entre les canalisations d'arrivée et de départ des fluides à haute et basse températures.

On a représenté sur la Figure 37 une réalisation particulière des moyens d'interconnexion. Ils comprennent un actionneur 322 constitué d'un vérin thermique 324 et d'une thermistance 326. La thermistance est reliée à un connecteur 328 qui reçoit un signal électrique permettant d'actionner le vérin thermique. Le clapet 318 est apte à obturer un siège 330 formé dans une canalisation de sortie de la tubulure à basse température 332. Lorsque le clapet 318 est décollé du siège 330, la tubulure à basse température 332 communique avec la tubulure à haute température 334. Un ressort de rappel 336 permet de solliciter le clapet 318 en position ouverte à l'encontre de l'action du vérin thermique 324.

Dans une configuration de fonctionnement à charge modérée du moteur thermique, les vannes 300 sont fermées, de telle sorte que le réseau principal 2 à basse température et la boucle secondaire 4 à haute température sont isolés l'un de l'autre. La capacité de refroidissement du moteur thermique est constituée uniquement par le radiateur à haute température et la capacité de refroidissement de la boucle secondaire 4 par le radiateur à basse température 60. Au contraire, dans une configuration de forte charge, les vannes 300 sont ouvertes, de telle sorte que le fluide peut circuler également dans le radiateur à basse température. Ainsi, la capacité de refroidissement du réseau principal est augmentée de celle du radiateur à basse température. De la même manière, le fluide à basse température de la boucle secondaire 4 peut circuler dans le radiateur à haute température 18. Dans cette configuration, le réseau principal 2 et la boucle secondaire ne sont pas isolés l'un de l'autre mais, au contraire, le fluide de refroidissement peut passer d'une boucle à l'autre.

## Revendications

1. Système de gestion de l'énergie thermique développée par un moteur thermique de véhicule automobile comprenant un réseau principal (2) équipé d'une pompe principale (12) pour faire circuler un fluide caloporteur entre le moteur thermique (10) et un radiateur de refroidissement principal (18) ayant une surface d'échange et échangeant de la chaleur avec l'air atmosphérique extérieur, le réseau principal (2) comprenant, en outre, une canalisation de court-circuit (20) et une canalisation de chauffage (22) comportant un aérotherme (24), et une boucle secondaire (4) incluant un radiateur secondaire (60) ayant une surface d'échange et une pompe secondaire (58), **caractérisé en ce que** le réseau principal (2) et la boucle secondaire (4) sont reliés par des moyens d'interconnexion (6) qui permettent de faire circuler de manière contrôlée le fluide caloporteur entre le réseau principal (2) et la boucle secondaire (4) ou d'interdire cette circulation en fonction de l'état de charge du moteur thermique (10).

2. Système selon la revendication 1, **caractérisé en ce que** les moyens d'interconnexion (6) sont aptes à constituer des configurations du réseau principal (2) et de la boucle secondaire (4) telles qu'une partie ou la totalité de la surface d'échange de chaleur du radiateur principal (18) et/ou de la surface d'échange du radiateur secondaire (60) sont intégrées sélectivement soit exclusivement au réseau principal (2), soit exclusivement à la boucle secondaire (4), soit simultanément au réseau principal (2) et à la boucle secondaire (4) en fonction d'au moins un paramètre de contrôle de l'état de charge du moteur (10) du véhicule automobile.

3. Système selon la revendication 2, **caractérisé en ce que** le paramètre de contrôle est choisi parmi le groupe comprenant la température du fluide caloporteur de refroidissement du moteur, la charge moteur, le régime moteur, la puissance rejetée par le moteur thermique (10) sur le fluide caloporteur de refroidissement ou une combinaison des valeurs de ces différents paramètres.

4. Système selon la revendication 2 ou 3, **caractérisé en ce que** le passage d'une configuration à une autre se fait par une variation continue de la surface d'échange de chaleur.

5. Système selon la revendication 2 ou 3, **caractérisé en ce que** le radiateur principal (18) et/ou le radiateur secondaire (60) sont scindés en au moins deux sections d'échange de chaleur discrètes (144, 146), le passage d'une configuration à une autre se faisant par incréments par le passage d'une section d'échange de chaleur d'un circuit à l'autre.

6. Système selon la revendication 5, **caractérisé en ce que** les surfaces d'échange de chaleur de l'échangeur principal (18) intégré au réseau principal (2) et/ou les surfaces d'échange de chaleur de l'échangeur de chaleur secondaire (60) intégré à la boucle secondaire (4) sont raccordées en parallèle les unes aux autres.

7. Système selon la revendication 5, **caractérisé en ce que** les surfaces d'échange de l'échangeur principal (18) intégré au réseau principal (2) et/ou les surfaces d'échange de chaleur de l'échangeur de chaleur secondaire (60) intégré à la boucle secondaire (4) sont raccordées en série les unes aux autres.

8. Système selon l'une des revendications 1 à 7, **caractérisé en ce que** le réseau principal (4) comporte une vanne thermostatique (30) à trois voies (30-1, 30-2, 30-3), une première voie (30-1) étant raccordée à une canalisation de moteur (8), une deuxième voie (30-2) étant raccordée à une canalisation de court-circuit (20), une troisième voie (30-3) étant raccordée à une canalisation de radiateur principal.

9. Système selon l'une des revendications 1 à 7, **caractérisé en ce que** le réseau principal (4) comporte une vanne thermostatique (30) à quatre voies (30-1, 30-2, 30-3, 30-4), une première voie (30-1) étant raccordée à une canalisation de moteur (8), une deuxième voie (30-2) étant raccordée à une canalisation de court-circuit (20), une troisième voie (30-3) étant raccordée à une canalisation de radiateur principal (16), une quatrième voie (30-4) étant raccordée à une canalisation de chauffage (22).

10. Système selon l'une des revendications 1 à 9, **caractérisé en ce que** le véhicule automobile comporte un ou plusieurs équipements en relation d'échange thermique avec le milieu qui leur est extérieur par l'intermédiaire d'un échangeur de chaleur d'équipement (34, 36, 38, 64, 66), le ou les échangeurs de chaleur d'équipement étant intégrés au réseau principal (2) et/ou à la boucle secondaire (4), chaque échangeur de chaleur étant en relation d'échange thermique avec le fluide caloporteur.

11. Système selon l'une des revendications 1 à 10, **caractérisé en ce que** le radiateur principal (18) et/ou le radiateur secondaire (60) font partie d'un module d'échange de chaleur comprenant un premier échangeur de chaleur (18) et un second échangeur de chaleur (60) ayant chacun une boîte collectrice d'entrée et une boîte collectrice de sortie, le premier et le second échangeur de chaleur (18, 60) étant superposés de manière à être traversés par un même flux d'air, la boîte collectrice de sortie du premier échangeur de chaleur (18) communiquant avec la boîte collectrice d'entrée du second échangeur de chaleur (60) par un orifice de passage, des moyens de vanne permettant d'ouvrir ou de fermer l'orifice de passage.

12. Système selon l'une des revendications 1 à 11, **caractérisé en ce que** les moyens d'interconnexion (6) sont aptes à constituer une configuration de démarrage à froid comprenant une boucle principale de démarrage à froid et une boucle secondaire de démarrage à froid isolées l'une de l'autre, le radiateur principal (18) et le radiateur secondaire (60) étant intégrés à la boucle secondaire de démarrage à froid ; et une configuration de fonctionnement normal dans laquelle la circulation du fluide caloporteur s'effectue par intermittence entre la boucle principale de démarrage à froid et la boucle secondaire de démarrage à froid en fonction de l'état de charge du moteur thermique.

13. Système selon l'une des revendications 1 à 12, **caractérisé en ce qu'**il comporte une vanne thermostatique (30) disposée sur la boucle principale de démarrage à froid, une circulation de fluide caloporteur s'effectuant entre la boucle principale de démarrage à froid et la boucle secondaire de démarrage à froid en fonction de l'état ouvert ou fermé de la vanne thermostatique (30).

14. Système selon l'une des revendications 12 et 13, **caractérisé en ce que** les moyens d'interconnexion (6) sont, en outre, aptes à réaliser une configuration de forte charge dans laquelle le réseau principal (2) et la boucle secondaire (4) sont isolés l'un de l'autre, le radiateur principal (18) servant exclusivement au refroidissement du réseau principal (2) et le radiateur secondaire (60) servant exclusivement au refroidissement de la boucle secondaire (4).

15. Système selon la revendication 12 ou 13, **caractérisé en ce que** les moyens d'interconnexion sont, en outre, aptes à réaliser une configuration de très forte charge dans laquelle une circulation de fluide caloporteur s'effectue entre le réseau principal (2) et la boucle secondaire (4), la capacité de refroidissement du radiateur secondaire (60) étant utilisée pour refroidir simultanément la boucle secondaire (4) et le moteur thermique (10).

16. Système selon l'une des revendications 1 à 15, **caractérisé en ce que** les moyens d'interconnexion comprennent une vanne à quatre voies (70) et une première et une seconde vanne à trois voies (72, 74), la vanne à quatre voies (70) et la première vanne à trois voies (72) étant intégrées au réseau principal (2), la seconde vanne à trois voies (74) étant intégrée à la boucle secondaire (4).

17. Système de vannes pour réaliser l'interconnexion d'un réseau principal (2) équipé d'une pompe principale (12) pour faire circuler un fluide de cycle caloporteur entre le moteur thermique (10) et un radiateur de refroidissement principal (18) échangeant de la chaleur avec l'air atmosphérique extérieur, et d'une boucle secondaire (2) incluant un radiateur secondaire (60) et une pompe secondaire (58), **caractérisé en ce qu'**il comporte une vanne à quatre voies (70) et une première et une seconde vanne à trois voies (72, 74), la vanne à quatre voies (70) et la première vanne à trois voies (72) étant intégrées au réseau principal (2), la seconde vanne à trois voies (74) étant intégrée à la boucle secondaire.

18. Système selon l'une des revendications 1 à 12, **caractérisé en ce que** l'échangeur principal (18) est scindé en une section d'échange de chaleur à haute température (144) intégrée en permanence exclusivement au réseau principal (2) et une section d'échange de chaleur attribuable (146) qui peut être intégrée soit au réseau principal (2), soit à la boucle secondaire (4), l'échangeur de chaleur secondaire étant, quant à lui, intégré en permanence à la boucle secondaire (2).

19. Système selon la revendication 18, **caractérisé en ce que** les moyens d'interconnexion (6) comprennent deux vannes à quatre voies (150).

20. Système selon la revendication 18, **caractérisé en ce que** les moyens d'interconnexion (6) comprennent une vanne unique à cinq voies au moins (160, 210, 240, 250).

21. Système selon l'une des revendications 18 à 20, **caractérisé en ce que** la vanne à cinq voies au moins comprend un corps (162) comportant une paroi latérale cylindrique délimitant un logement cylindrique, au moins deux tubulures (168) pour l'entrée ou la sortie du fluide dans le corps (162), un organe rotatif (174) de réglage_monté tournant autour d'un axe (XX) dans le logement cylindrique du corps (162), cet organe rotatif étant propre à prendre différentes positions angulaires pour contrôler la circulation du fluide entre les tubulures.

22. Système selon l'une des revendications 20 ou 21, **caractérisé en ce que** les tubulures de la vanne sont réparties sur un seul niveau.

23. Système selon l'une des revendications 20 ou 21, **caractérisé en ce que** les tubulures de la vanne sont réparties sur plusieurs niveaux.

24. Système selon l'une des revendications 21 à 23, **caractérisé en ce que** l'organe rotatif (174) de réglage comporte des poches (186) aptes à mettre deux ou plus de deux tubulures en communication l'une avec l'autre.

25. Système selon l'une des revendications 18 à 24, **caractérisé en ce que** les moyens d'interconnexion (6) sont aptes à constituer au moins une configuration de démarrage à froid et/ou de fonctionnement à charge modérée dans laquelle la section d'échange de chaleur attribuable (146) est intégrée à la boucle secondaire (2) et une configuration de forte charge dans laquelle la section d'échange de chaleur attribuable (146) est intégrée au réseau principal (2).

26. Système selon l'une des revendications 1 à 11, **caractérisé en ce qu'**il est constitué d'un radiateur principal (18) et d'un radiateur secondaire (60) comportant chacun une section d'échange de chaleur unique, les moyens d'interconnexion (300) permettant de constituer soit une configuration de charge faible et moyenne dans laquelle le radiateur principal (18) est intégré exclusivement au réseau principal (2) et le radiateur secondaire (60) est intégré exclusivement à la boucle secondaire (60), soit une configuration de forte charge dans laquelle le radiateur principal (18) et le radiateur secondaire (60) sont montés en parallèle et appartiennent simultanément au réseau principal (2) et à la boucle secondaire (4).

27. Système selon la revendication 26, **caractérisé en ce que** les moyens d'interconnexion sont constitués par des vannes (300) à deux voies.

28. Système selon l'une des revendications 26 ou 27, **caractérisé en ce que** les moyens d'interconnexion sont constitués par des orifices de passage (316) prévus entre la boite collectrice de l'échangeur principal (18) et la boite collectrice de l'échangeur secondaire (60) et par des clapets (318) qui permettent d'ouvrir ou de fermer sélectivement ces orifices.

29. Système selon la revendication 28, **caractérisé en ce que** le clapet (218) est commandé par un vérin thermique (324) composé d'un élément à dilatation de cire actionné par une thermistance (326).

30. Système selon l'une des revendications 28 ou 29, **caractérisé en ce que** le vérin (324) est intégré aux tubulures (332, 334) de la boîte à eau.

31. Système selon l'une des revendications 1 à 16 et 18 à 30, **caractérisé en ce que** le réseau principal (2) et la boucle secondaire (4) comportent chacun un vase d'expansion.

32. Système selon l'une des revendications 1 à 16 et 18 à 30, **caractérisé en ce que** le réseau principal (2) et la boucle secondaire (4) comportent un vase d'expansion commun.

33. Système selon l'une des revendications 1 à 16 et 18 à 32, **caractérisé en ce que** le réseau principal (2) comprend une canalisation de moteur (8) sur laquelle sont montés la pompe principale (12) et le moteur thermique (10), une canalisation de chauffage (22) sur laquelle est monté l'aérotherme (24), une canalisation de radiateur principal (16) sur laquelle est monté le radiateur principal (18) et une canalisation de court-circuit (20), la canalisation de moteur (8), la canalisation de chauffage (22), la canalisation de radiateur principal (16) et la canalisation de court-circuit étant montées en parallèle.

34. Système selon la revendication 33, **caractérisé en ce que** la canalisation de moteur (8), la canalisation de chauffage (22), la canalisation de radiateur principal (16) et la canalisation de court-circuit sont montées en parallèle entre une conduite (26) et une autre conduite (28).

35. Système selon l'une des revendications 1 à 16 et 18 à 34, **caractérisé en ce que** la boucle secondaire (4) comprend une canalisation de radiateur secondaire (56) sur laquelle sont montés le radiateur secondaire (60) et une pompe de circulation secondaire (58), et une canalisation (62).

## Claims

1. System for managing the thermal energy developed by a motor vehicle internal combustion engine comprising a main network (2) equipped with a main pump (12) for circulating a heat transfer fluid between the internal combustion engine (10) and a main cooling radiator (18) having a heat exchange area and exchanging heat with the external atmospheric air, the main network (2) further comprising a short-circuit line (20) and a heating line (22) comprising an air heater unit (24), and a secondary loop (4) including a secondary radiator (60) having a heat exchange area and a secondary pump (58), **characterized in that** the main network (2) and the secondary loop (4) are connected by interconnecting means (6) for controllably circulating the heat transfer fluid between the main network (2) and the secondary loop (4) or for inhibiting the said circulation according to the load state of the internal combustion engine (10).

2. System according to Claim 1, **characterized in that** the interconnecting means (6) are suitable for constituting configurations of the main network (2) and of the secondary loop (4) such that part or all of the heat exchange area of the main radiator (18) and/or the heat exchange area of the secondary radiator (60) are selectively integrated either exclusively with the main network (2), or exclusively with the secondary loop (4), or simultaneously with the main network (2) and with the secondary loop (4) according to at least one control parameter of the load state of the motor vehicle engine (10).

3. System according to Claim 2, **characterized in that** the control parameter is selected from the group comprising the temperature of the engine cooling heat transfer fluid, the engine load, the engine speed, the power discharged by the internal combustion engine (10) on the cooling heat transfer fluid or a combination of the values of these various parameters.

4. System according to either of Claims 2 and 3, **characterized in that** the transition from one configuration to another takes place by a continuous variation of the heat exchange area.

5. System according to either of Claims 2 and 3, **characterized in that** the main radiator (18) and/or the secondary radiator (60) is/are divided into at least two discrete heat exchange sections (144, 146), the transition from one configuration to another taking place by increments by the passage from one heat exchange section of a circuit to the other.

6. System according to Claim 5, **characterized in that** the heat exchange areas of the main heat exchanger (18) integrated with the main network (2) and/or the heat exchange areas of the secondary heat exchanger (60) integrated with the secondary loop (4) are connected in parallel to each other.

7. System according to Claim 5, **characterized in that** the heat exchange areas of the main heat exchanger (18) integrated with the main network (2) and/or the heat exchange areas of the secondary heat exchanger (60) integrated with the secondary loop (4) are connected in series with each other.

8. System according to one of Claims 1 to 7, **characterized in that** the main network (4) comprises a three-way (30-1, 30-2, 30-3) thermostatic valve (30), a first port (30-1) being connected to an engine line (8), a second port (30-2) being connected to a short-circuit line (20), a third port (30-3) being connected to a main radiator line.

9. System according to one of Claims 1 to 7, **characterized in that** the main network (4) comprises a four-way (30-1, 30-2, 30-3, 30-4) thermostatic valve (30), a first port (30-1) being connected to an engine line (8), a second port (30-2) being connected to a short-circuit line (20), a third port (30-3) being connected to a main radiator line (16), a fourth port (30-4) being connected to a heating line (22).

10. System according to one of Claims 1 to 9, **characterized in that** the, motor vehicle comprises one or more units having a heat exchange relationship with the medium that is external to them via a unit heat exchanger (34, 36, 38, 64, 66), the unit heat exchanger or exchangers being integrated with the main network (2) and/or with the secondary loop (4), each heat exchanger having a heat exchange relationship with the heat transfer fluid.

11. System according to one of Claims 1 to 10, **characterized in that** the main radiator (18) and/or the secondary radiator (60) form part of a heat exchange module comprising a first heat exchanger (18) and a second heat exchanger (60) each having an inlet manifold and an outlet manifold, the first and second heat exchangers (18, 60) being superimposed so as to be crossed by the same air stream, the outlet manifold of the first heat exchanger (18) communicating with the inlet manifold of the second heat exchanger (60) via an orifice, with valve means for opening or closing the orifice.

12. System according to one of Claims 1 to 11, **characterized in that** the interconnecting means (6) are suitable for constituting a cold starting configuration comprising a main cold starting loop and a secondary cold starting loop isolated from one another, the main radiator (18) and the secondary radiator (60) being integrated with the secondary cold starting loop; and a normal operating configuration in which the heat transfer fluid flows intermittently between the main cold starting loop and the secondary cold starting loop according to the load state of the internal combustion engine.

13. System according to one of Claims 1 to 12, **characterized in that** it comprises a thermostatic valve (30) placed on the main cold starting loop, heat transfer fluid flowing between the main cold starting loop and the secondary cold starting loop according to the open or closed status of the thermostatic valve (30).

14. System according to either of Claims 12 and 13, **characterized in that** the interconnecting means (6) are further suitable for producing a high load configuration in which the main network (2) and the secondary loop (4) are isolated from one another, the main radiator (18) serving exclusively to cool the main network, (2) and the secondary radiator (60) serving exclusively to cool the secondary loop (4).

15. System according to either of Claims 12 and 13, **characterized in that** the interconnecting means are further suitable for producing a very high load configuration in which heat transfer fluid flows between the main network (2) and the secondary loop (4), the cooling capacity of the secondary radiator (60) being used to simultaneously cool the secondary loop (4) and the internal combustion engine (10).

16. System according to one of Claims 1 to 15, **characterized in that** the interconnecting means comprise a four-way valve (70) and first and second three-way valves (72, 74), the four-way valve (70) and the first three-way valve (72) being integrated with the main network (2), the second three-way valve (74) being integrated with the secondary loop (4).

17. System of valves for interconnecting a main network (2) equipped with a main pump (12) for circulating a heat transfer cycle fluid between the internal combustion engine '(10) and a main cooling radiator (18) exchanging heat with the external atmospheric air, and a secondary loop (2) including a secondary radiator (60) and a secondary pump (58), **characterized in that** it comprises a four-way valve (70) and first and second three-way valves (72, 74), the four-way valve (70) and the first three-way valve (72) being integrated with the main network (2), the second three-way valve (74) being integrated with the secondary loop.

18. System according to one of Claims 1 to 12, **characterized in that** the main heat exchanger (18) is divided into a high temperature heat exchange section (144) integrated permanently and exclusively with the main network (2), and an attributable heat exchange section (146) which may be integrated either with the main network (2), or with the secondary loop (4), the secondary heat exchanger being integrated permanently with the secondary loop (2).

19. System according to Claim 18, **characterized in that** the interconnecting means (6) comprise two four-way valves (150).

20. System according to Claim 18, **characterized in that** the interconnecting means (6) comprise a single at least five-way valve (160, 210, 240, 250).

21. System according to one of Claims 18 to 20, **characterized in that** the at least five-way valve comprises a body (162) comprising a cylindrical side wall bounding a cylindrical housing, at least two nozzles (168) for the inlet and outlet of the fluid in the body (162), a rotating adjusting member (174) mounted rotating about an axis (XX) in the cylindrical housing of the body (162), the said rotating member being suitable for taking various angular positions to control the fluid flow between the nozzles.

22. System according to either of Claims 20 and 21, **characterized in that** the nozzles of the valve are distributed at a single level.

23. System according to either of Claims 20 and 21, **characterized in that** the nozzles of the valve are distributed at a plurality of levels.

24. System according to one of Claims 21 to 23, **characterized in that** the rotating adjusting member (174) comprises bags (186) suitable for making two or more nozzles communicate with one another.

25. System according to one of Claims 18 to 24, **characterized in that** the interconnecting means (6) are suitable for constituting at least one cold starting and/or moderate load operating configuration in which the attributable heat exchange section (146) is integrated with the secondary loop (4) and a high load configuration in which the attributable heat exchange section (146) is integrated with the main network (2).

26. System according to one of Claims 1 to 11, **characterized in that** it consists of a main radiator (18) and a secondary radiator (60) each comprising a single heat exchange section, the interconnecting means (300) suitable for constituting either a low and medium load configuration in which the main radiator (18) is exclusively integrated with the main network (2) and the secondary radiator (60) is integrated exclusively with the secondary loop (60), or a high load configuration in which the main radiator (18) and the secondary radiator (60) are mounted in parallel and belong simultaneously to the main network (2) and the secondary loop (4).

27. System according to Claim 26, **characterized in that** the interconnecting means consist of two-way valves (300).

28. System according to either of Claims 26 and 27, **characterized in that** the interconnecting means consist of orifices (316) provided between the manifold of the main heat exchanger (16) and the manifold of the secondary heat exchanger (60) and of check valves (318) suitable for selectively opening or closing the said orifices.

29. System according to Claim 28, **characterized in that** the check valve (218) is controlled by a thermal cylinder (324) comprising a wax expansion element actuated by a thermistance (326).

30. System according to either of Claims 28 and 29, **characterized in that** the cylinder (324) is integrated with the nozzles (332, 334) of the water box.

31. System according to one of Claims 1 to 16 and 18 to 30, **characterized in that** the main network (2) and the secondary loop (4) each comprise an expansion vessel.

32. System according to one of Claims 1 to 16 and 18 to 30, **characterized in that** the main network (2) and the secondary loop (4) comprise a common expansion vessel.

33. System according to one of Claims 1 to 16 and 18 to 32, **characterized in that** the main network (2) comprises an engine line (8) on which the main pump (12) and the internal combustion engine (10) are mounted; a heating line (22) on which the air heater unit (24) is mounted, a main radiator line (16) on which the main radiator (18) is mounted and a short-circuit line (20), the engine line (8), the heating line (22), the main radiator line (16) and the short-circuit line being mounted in parallel.

34. System according to Claim 33, **characterized in that** the engine line (8), the heating line (22), the main radiator line (16) and the short-circuit line are mounted in parallel between one line (26) and another line (28).

35. System according to one of Claims 1 to 16 and 18 to 34, **characterized in that** the secondary loop (4) comprises a secondary radiator line (56) on which the secondary radiator (60) and a secondary circulating pump (58) are mounted, and a line (62).

## Patentansprüche

1. System zur Steuerung der Wärmeenergie, die von einem Verbrennungsmotor eines Kraftfahrzeugs entwickelt wird, umfassend ein Hauptnetz (2), das mit einer Hauptpumpe (12) versehen ist, um ein Kältefluid zwischen dem Verbrennungsmotor (10) und einem Hauptkühlradiator (18) zirkulieren zu lassen, der eine Austauschfläche besitzt und Wärme mit der Außenluft austauscht, wobei das Hauptnetz (2) ferner einen Kurzschlusskanal (20) und einen Heizkanal (22), umfassend eine Lufttherme (24), aufweist, und eine Nebenschleife (4), die einen Nebenradiator (60) mit einer Austauschfläche und einer Nebenpumpe (58) einschließt, **dadurch gekennzeichnet, dass** das Hauptnetz (2) und die Nebenschleife (4) durch Verbindungsmittel (6) verbunden sind, die es ermöglichen, das Kältefluid zwischen dem Hauptnetz (2) und der Nebenschleife (4) auf kontrollierte Weise zirkulieren zu lassen, oder diese Zirkulation in Abhängigkeit vom Lastzustand des Verbrennungsmotors (10) zu untersagen.

2. System nach Anspruch 1, **dadurch gekennzeichnet, dass** die Verbindungsmittel (6) geeignet sind, Konfigurationen des Hauptnetzes (2) und der Nebenschleife (4) zu bilden, so dass ein Teil oder die Gesamtheit der Wärmeaustauschfläche des Hauptradiators (18) und/oder der Austauschfläche des Nebenradiators (60) selektiv entweder ausschließlich in das Hauptnetz (2) oder ausschließlich in die Nebenschleife (4) oder gleichzeitig in das Hauptnetz (2) und die Nebenschleife (4) in Abhängigkeit von mindestens einem Parameter zur Kontrolle des Lastzustands des Motors (10) des Kraftfahrzeugs integriert werden.

3. System nach Anspruch 2, **dadurch gekennzeichnet, dass** der Kontrollparameter in der Gruppe ausgewählt wird, umfassend die Temperatur des Kältefluids zur Kühlung des Motors, die Last des Motors, die Motordrehzahl, die vom Verbrennungsmotor (10) auf das Kältefluid zur Kühlung abgegebene Leistung oder eine Kombination der Werte dieser verschiedenen Parameter.

4. System nach Anspruch 2 oder 3, **dadurch gekennzeichnet, dass** der Übergang von einer Konfiguration zu einer anderen durch eine kontinuierliche Veränderung der Wärmeaustauschfläche erfolgt.

5. System nach Anspruch 2 oder 3, **dadurch gekennzeichnet, dass** der Hauptradiator (18) und/oder der Nebenradiator (60) in mindestens zwei unterschiedliche Wärmeaustauschabschnitte (144, 146) getrennt sind, wobei der Übergang von einer Konfiguration zu einer anderen in Inkrementen durch den Übergang von einem Wärmeaustauschabschnitt einer Schaltung zum anderen erfolgt.

6. System nach Anspruch 5, **dadurch gekennzeichnet, dass** die Wärmeaustauschflächen des Hauptwärmetauschers (18), der in das Hauptnetz (2) integriert ist, und/oder die Wärmeaustauschflächen des Nebenwärmetauschers (60), der in die Nebenschleife (4) integriert ist, parallel zueinander angeschlossen sind.

7. System nach Anspruch 5, **dadurch gekennzeichnet, dass** die Wärmeaustauschflächen des Hauptwärmetauschers (18), der in das Hauptnetz (2) integriert ist, und/oder die Wärmeaustauschflächen des Nebenwärmetauschers (60), der in die Nebenschleife (4) integriert ist, in Serie zueinander angeschlossen sind.

8. System nach einem der Ansprüche 1 bis 7, **dadurch gekennzeichnet, dass** das Hauptnetz (4) ein thermostatisches Ventil (30) mit drei Wegen (30-1, 30-2, 30-3) umfasst, wobei ein erster Weg (30-1) an einen Motorkanal (8), ein zweiter Weg (30-2) an einen Kurzschlusskanal (20) und ein dritter Weg (30-3) an einen Hauptradiatorkanal angeschlossen sind.

9. System nach einem der Ansprüche 1 bis 7, **dadurch gekennzeichnet, dass** das Hauptnetz (4) ein thermostatisches Ventil (30) mit vier Wegen (30-1, 30-2, 30-3, 30-4) umfasst, wobei ein erster Weg (30-1) an einen Motorkanal (8), ein zweiter Weg (30-2) an einen Kurzschlusskanal (20), ein dritter Weg (30-3) an einen Hauptradiatorkanal (16) und ein vierter Weg (30-4) an einen Heizkanal (22) angeschlossen sind.

10. System nach einem der Ansprüche 1 bis 9, **dadurch gekennzeichnet, dass** das Kraftfahrzeug eine oder mehrere Ausrüstungen in Wärmeaustauschrelation mit dem zu ihnen äußeren Medium über einen Ausrüstungswärmetauscher (34, 36, 38, 64, 66) umfasst, wobei der oder die Ausrüstungswärmetäuscher in das Hauptnetz (2) und/oder die Nebenschleife (4) integriert sind, wobei jeder Wärmetauscher mit dem Kältefluid in Wärmeaustauschrelation steht.

11. System nach einem der Ansprüche 1 bis 10, **dadurch gekennzeichnet, dass** der Hauptradiator (18) und/oder der Nebenradiator (60) Teil eines Wärmeaustauschmoduls sind, umfassend einen ersten Wärmetauscher (18) und einen zweiten Wärmetauscher (60), die jeweils einen Eingangssammelkasten und einen Ausgangssammelkasten aufweisen, wobei der erste und der zweite Wärmetauscher (18, 60) übereinander angeordnet sind, um von einem selben Luftstrom durchquert zu werden, wobei der Ausgangssammelkasten des ersten Wärmetauschers (18) mit dem Eingangssammelkasten des zweiten Wärmetauschers (60) über eine Durchgangsöffnung in Verbindung steht, wobei es Ventilmittel ermöglichen, die Durchgangsöffnung zu öffnen oder zu schließen.

12. System nach einem der Ansprüche 1 bis 11, **dadurch gekennzeichnet, dass** die Verbindungsmittel (6) geeignet sind, eine Kaltstartkonfiguration zu bilden, umfassend eine Hauptkaltstartschleife und eine Nebenkaltstartschleife, die voneinander getrennt sind, wobei der Hauptradiator (18) und der Nebenradiator (60) in die Nebenkaltstartschleife integriert sind; und dazu geeignet sind, eine Normalfunktionskonfiguration zu bilden, bei der die Zirkulation des Kältefluids intermittierend zwischen der Hauptkaltstartschleife und der Nebenkaltstartschleife in Abhängigkeit vom Lastzustand des Verbrennungsmotors erfolgt.

13. System nach einem der Ansprüche 1 bis 12, **dadurch gekennzeichnet, dass** es ein thermostatisches Ventil (30) umfasst, das auf der Hauptkaltstartschleife angeordnet ist, wobei eine Zirkulation des Kältefluids zwischen der Hauptkaltstartschleife und der Nebenkaltstartschleife in Abhängigkeit vom offenen oder geschlossenen Zustand des thermostatischen Ventils (30) erfolgt.

14. System nach einem der Ansprüche 12 und 13, **dadurch gekennzeichnet, dass** die Verbindungsmittel (6) ferner eine Starklastkonfiguration verwirklichen können, bei der das Hauptnetz (2) und die Nebenschleife (4) voneinander getrennt sind, wobei der Hauptradiator (18) ausschließlich zur Kühlung des Hauptnetzes (2) und der Nebenradiator (60) ausschließlich zur Kühlung der Nebenschleife (4) dient.

15. System nach Anspruch 12 oder 13, **dadurch gekennzeichnet, dass** die Verbindungsmittel ferner geeignet sind, eine Konfiguration sehr starker Last zu verwirklichen, bei der eine Zirkulation eines Kältefluids zwischen dem Hauptnetz (2) und der Nebenschleife (4) erfolgt, wobei die Kühlleistung des Nebenradiators (60) dazu verwendet wird, gleichzeitig die Nebenschleife (4) und den Verbrennungsmotor (10) zu kühlen.

16. System nach einem der Ansprüche 1 bis 15, **dadurch gekennzeichnet, dass** die Verbindungsmittel ein Ventil mit vier Wegen (70) und ein erstes und ein zweites Ventil mit drei Wegen (72, 74) umfassen, wobei das Vierwegeventil (70) und das erste Dreiwegeventil (72) in das Hauptnetz (2) integriert sind, während das zweite Dreiwegeventil (74) in die Nebenschleife (4) integriert ist.

17. Ventilsystem zur Verwirklichung der Verbindung eines Hauptnetzes (2), das mit einer Hauptpumpe (12) versehen ist, um ein Kältezyklusfluid zwischen dem Verbrennungsmotor (10) und einem Hauptkühlradiator (18) zirkulieren zu lassen, der Wärme mit der Außenluft austauscht, und einer Nebenschleife (2), die einen Nebenradiator (60) und eine Nebenpumpe (58) einschließt, **dadurch gekennzeichnet, dass** es ein Vierwegeventil (70) und ein erstes und ein zweites Dreiwegeventil (72, 74) umfasst, wobei das Vierwegeventil (70) und das erste Dreiwegeventil (72) in das Hauptnetz (2) integriert sind, während das zweite Dreiwegeventil (74) in die Nebenschleife integriert ist.

18. System nach einem der Ansprüche 1 bis 12, **dadurch gekennzeichnet, dass** der Hauptwärmetauscher (18) in einen Wärmetauschabschnitt mit hoher Temperatur (144), der ständig ausschließlich in das Hauptnetz (2) integriert ist, und einen zuteilbaren Wärmetauschabschnitt (146) getrennt ist, der entweder in das Hauptnetz (2) oder in die Nebenschleife (4) integriert sein kann, wobei der Nebenwärmetauscher seinerseits ständig in die Nebenschleife (2) integriert ist.

19. System nach Anspruch 18, **dadurch gekennzeichnet, dass** die Verbindungsmittel (6) zwei Vierwegeventile (150) umfassen.

20. System nach Anspruch 18, **dadurch gekennzeichnet, dass** die Verbindungsmittel (6) ein einziges Ventil mit mindestens fünf Wegen (160, 210, 240, 250) umfassen.

21. System nach einem der Ansprüche 18 bis 20, **dadurch gekennzeichnet, dass** das Ventil mit mindestens fünf Wegen einen Körper (162) aufweist, umfassend eine zylindrische Seitenwand, die eine zylindrische Lagerung begrenzt, mindestens zwei Rohrleitungen (168) für den Eintritt und den Austritt des Fluids in bzw. aus dem Körper (162), ein Drehregelelement (174), das um eine Achse (XX) drehbar in der zylindrischen Lagerung des Körpers (162) montiert ist, wobei dieses Drehelement verschiedene Winkelpositionen einnehmen kann, um die Zirkulation des Fluids zwischen den Rohrleitungen zu kontrollieren.

22. System nach einem der Ansprüche 20 oder 21, **dadurch gekennzeichnet, dass** die Rohrleitungen des Ventils auf einer einzigen Ebene verteilt sind.

23. System nach einem der Ansprüche 20 oder 21, **dadurch gekennzeichnet, dass** die Rohrleitungen des Ventils auf mehreren Ebenen verteilt sind.

24. System nach einem der Ansprüche 21 bis 23, **dadurch gekennzeichnet, dass** das Drehregelelement (174) Taschen (186) umfasst, die zwei oder mehr als zwei Rohrleitungen miteinander in Verbindung bringen können.

25. System nach einem der Ansprüche 18 bis 24, **dadurch gekennzeichnet, dass** die Verbindungsmittel (6) geeignet sind, mindestens eine Kaltstartkonfiguration und/oder Funktionskonfiguration mit mäßiger Last, bei der der zuteilbare Wärmeaustauschabschnitt (146) in die Nebenschleife (4) integriert ist, und eine Starklastkonfiguration zu bilden, bei der der zuteilbare Wärmeaustauschabschnitt (146) in das Hauptnetz (2) integriert ist.

26. System nach einem der Ansprüche 1 bis 11, **dadurch gekennzeichnet, dass** es von einem Hauptradiator (18) und einem Nebenradiator (60) gebildet ist, jeweils umfassend einen einzigen Wärmeaustauschabschnitt, wobei es die Verbindungsmittel (300) ermöglichen, entweder eine Konfiguration geringer und durchschnittlicher Last, bei der der Hauptradiator (18) ausschließlich in das Hauptnetz (2) integriert ist und der Nebenradiator (60) ausschließlich in die Nebenschleife (60) integriert ist, oder eine Starklastkonfiguration zu bilden, bei der der Hauptradiator (18) und der Nebenradiator (60) parallel montiert sind und gleichzeitig dem Hauptnetz (2) und der Nebenschleife (4) angehören.

27. System nach Anspruch 26, **dadurch gekennzeichnet, dass** die Verbindungsmittel von Zweiwegeventilen (300) gebildet sind.

28. System nach einem der Ansprüche 26 oder 27, **dadurch gekennzeichnet, dass** die Verbindungsmittel von Durchgangsöffnungen (316), die zwischen dem Sammelkasten des Hauptwärmetauschers (18) und dem Sammelkasten des Nebenwärmetauschers (60) vorgesehen sind, und von Klappen (318) gebildet sind, die es ermöglichen, diese Öffnungen selektiv zu öffnen oder zu schließen.

29. System nach Anspruch 28, **dadurch gekennzeichnet, dass** die Klappe (218) von einem Wärmezylinder (324) gesteuert wird, der aus einem Wachsdehnungselement besteht, das von einem Thermistor (326) betätigt wird.

30. System nach einem der Ansprüche 28 oder 29, **dadurch gekennzeichnet, dass** der Zylinder (324) in zwei Rohrleitungen (332, 334) des Wasserschranks integriert ist.

31. System nach einem der Ansprüche 1 bis 16 und 18 bis 30, **dadurch gekennzeichnet, dass** das Hauptnetz (2) und die Nebenschleife (4) jeweils ein Ausdehnungsgefäß umfassen.

32. System nach einem der Ansprüche 1 bis 16 und 18 bis 30, **dadurch gekennzeichnet, dass** das Hauptnetz (2) und die Nebenschleife (4) ein gemeinsames Ausdehnungsgefäß umfassen.

33. System nach einem der Ansprüche 1 bis 16 und 18 bis 32, **dadurch gekennzeichnet, dass** das Hauptnetz (2) einen Motorkanal (8), auf dem die Hauptpumpe (12) und der Verbrennungsmotor (10) montiert sind, einen Heizkanal (22), auf dem die Lufttherme (24) montiert ist, einen Hauptradiatorkanal (16), auf dem der Hauptradiator (18) montiert ist, und einen Kurzschlusskanal (20) umfasst, wobei der Motorkanal (8), der Heizkanal (22), der Hauptradiatorkanal (16) und der Kurzschlusskanal parallel montiert sind.

34. System nach Anspruch 33, **dadurch gekennzeichnet, dass** der Motorkanal (8), der Heizkanal (22), der Hauptradiatorkanal (16) und der Kurzschlusskanal parallel zwischen einer Leitung (26) und einer weiteren Leitung (28) montiert sind.

35. System nach einem der Ansprüche 1 bis 16 und 18 bis 34, **dadurch gekennzeichnet, dass** die Nebenschleife (4) einen Nebenradiatorkanal (56), auf dem der Nebenradiator (60) und eine Nebenzirkulationspumpe (58) montiert sind, und einen Kanal (62) umfasst.
